(19) Europäisches Patentamt
European Patent Office
Office européen des brevets

(11) **EP 4 199 578 A1**

(12) **EUROPEAN PATENT APPLICATION**
published in accordance with Art. 153(4) EPC

(43) Date of publication:
**21.06.2023 Bulletin 2023/25**

(21) Application number: **21863623.1**

(22) Date of filing: **01.09.2021**

(51) International Patent Classification (IPC):
**H04W 28/08** $^{(2023.01)}$   **H04W 88/16** $^{(2009.01)}$

(52) Cooperative Patent Classification (CPC):
**H04W 28/08; H04W 88/16**

(86) International application number:
**PCT/CN2021/115892**

(87) International publication number:
**WO 2022/048559 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.09.2020 CN 202010924405**

(71) Applicant: **Huawei Technologies Co., Ltd.
Shenzhen, Guangdong 518129 (CN)**

(72) Inventors:
- **PENG, Tao
  Shenzhen, Guangdong 518129 (CN)**
- **YU, Zhouyi
  Shenzhen, Guangdong 518129 (CN)**
- **HUA, Rongrong
  Shenzhen, Guangdong 518129 (CN)**

(74) Representative: **Gill Jennings & Every LLP
The Broadgate Tower
20 Primrose Street
London EC2A 2ES (GB)**

(54) **METHOD AND APPARATUS FOR ACCESSING GATEWAY**

(57)    A method for accessing a gateway and an apparatus are disclosed, relate to the field of communication technologies, and are applied to a network system including a virtual broadband network gateway vBNG, where the vBNG includes a control plane CP device and a plurality of UP devices managed by the CP device, and the network system further includes a user plane steering function USF device. The method includes: The USF device obtains user information of a target terminal; the USF device determines a target UP device in the plurality of UP devices based on the user information and load of the plurality of UP devices; and the USF device indicates the target terminal to access the target UP device. Therefore, an appropriate UP device is selected for the target terminal in the network system including the vBNG, and load balancing between the plurality of UP devices is implemented.

A USF device obtains user information of a target terminal — 310

↓

The USF device determines a target UP device in a plurality of UP devices based on the user information of the target terminal and load of the plurality of UP devices — 320

↓

The USF device indicates to enable the target terminal to access the target UP device — 330

FIG. 3

EP 4 199 578 A1

**Description**

**CROSS-REFERENCE TO RELATED APPLICATIONS**

This application claims priority to Chinese Patent Application No. 202010924405.X, filed with the China National Intellectual Property Administration on September 4, 2020 and entitled "METHOD FOR ACCESSING GATEWAY AND APPARATUS", which is incorporated herein by reference in its entirety.

**TECHNICAL FIELD**

This application relates to the field of communication technologies, and in particular, to a method for accessing a gateway and an apparatus.

**BACKGROUND**

As a software-defined networking (software designed network, SDN) technology and a network function virtualization (network function virtualization, NFV) technology develop, a broadband network gateway (broadband network gateway, BNG) decouples a control function from a forwarding function based on an architecture of the SDN technology and the NFV technology. The BNG that decouples the control function from the forwarding function based on the architecture of the SDN technology and the NFV technology may be referred to as a virtual broadband network gateway (virtual broadband network gateway, vBNG). Usually, the vBNG may include a control plane (control plane, CP) device and a plurality of user plane (user plane, UP) devices, and the CP device may manage the plurality of UP devices. Currently, when a terminal accesses a vBNG, how a CP device selects a most appropriate UP device for the terminal is still an urgent problem that needs to be resolved.

**SUMMARY**

Embodiments of this application provide a method for accessing a gateway and an apparatus, to help select an appropriate UP device for a target terminal in a network system including a vBNG, and implement load balancing between a plurality of UP devices.

According to a first aspect, an embodiment of this application provides a method for accessing a gateway. The method may be applied to a network system including a virtual broadband network gateway vBNG. The vBNG includes a control plane CP device and a plurality of UP devices managed by the CP device. Any UP device in the plurality of UP devices may be a physical UP device or a virtual UP device. The network system may further include a user plane steering function USF device.

The method may be performed by the USF device. In the method, the USF device may obtain user information of a target terminal, determine a target UP device in the plurality of UP devices based on the user information and load of the plurality of UP devices, and then indicate to enable the target terminal to access the target UP device. According to this design, in the network system including the vBNG, in any scenario, an appropriate target UP device may be selected for the target terminal based on the target terminal, the user information, and the load of the plurality of UP devices, and load balancing between the plurality of UP devices managed by the CP device is implemented. It should be noted that the method may be used to determine the target UP device for the target terminal in any scenario, including but not limited to a scenario in which the target terminal requests to go online, a scenario in which the target terminal is an online target terminal that has successfully accessed a gateway, and the like. This is not limited in this application.

In some cases, the plurality of UP devices managed by the CP device may be further divided into different UP device groups, and each UP device group may include at least two candidate UP devices. In the foregoing method, load balancing may also be implemented for each UP device group, and this is considered as that the load balancing between the plurality of UP devices managed by the CP device is implemented. In a possible design, the user information may include a service level agreement SLA level of the target terminal, and that the USF device determines a target UP device in the plurality of UP devices based on the user information and load information of the plurality of UP devices includes: The USF device determines, in the plurality of UP devices based on a correspondence between the SLA level and the UP device, at least two candidate UP devices corresponding to the SLA level; and selects, from the at least two candidate UP devices based on load of the at least two candidate UP devices, the target UP device whose load meets a specified first load condition.

According to the foregoing design, for example, the plurality of UP devices managed by the CP device may be divided into groups based on SLA levels. Therefore, when making a steering decision to determine the target UP device for the target terminal, the USF device may consider both an SLA requirement of the target terminal and load of each candidate UP device required by the SLA requirement, and select, from at least two candidate UP devices corresponding to a same SLA level, a most appropriate UP device for the target terminal to perform access or dynamic steering, so that load balancing between the at least two candidate UP devices corresponding to the SLA level is implemented.

In this embodiment of this application, the target UP device may be determined for the target terminal based on a plurality of types of load information and/or in a plurality of calculation manners, to implement load sharing, so that the load balancing between the plurality of UP devices is implemented. This is not limited in this application. For example, the first load condition may include: selecting a UP device whose load is smallest; and/or selecting a UP device whose load is not greater than a first value, where the first value includes an average value of the load of the at least two candidate UP devices. For example, load of any UP device in the plurality of UP devices may include user session load and/or traffic load. The user session load may include at least one of the following: a quantity of user sessions and session usage; and the traffic load may include bandwidth usage. In other words, the target terminal may always be steered to a UP device whose load is small, to avoid load unbalancing between UP devices caused by overload of one or some UP devices in the plurality of UP devices.

In this embodiment of this application, the USF device may make a steering decision for the target terminal in the scenario in which the target terminal requests to go online, to determine the target UP device for the target terminal, so that the target terminal accesses the gateway through the target UP device, to connect to a network. In a possible design, that the USF device obtains user information of a target terminal may include: The USF device obtains the user information of the target terminal from the CP device when the target terminal requests the CP device to go online, where the user information is obtained by the CP device based on a dialup protocol packet sent by the target terminal. This design helps implement load balancing between different UP devices in a process in which the terminal requests to go online.

In this embodiment of this application, when sensing that a steering condition is triggered, the USF device may also make a steering decision on the online target terminal to determine the target UP device to which the target terminal is to be steered, so that the load balancing between the plurality of UP devices is implemented by dynamically steering the online terminal. In a possible design, if the target terminal is an online target terminal that has accessed a gateway through a first UP device, the first UP device is at least one UP device in the plurality of UP devices; that the USF device determines a target UP device in the plurality of UP devices based on the user information and load of the plurality of UP devices includes: when determining that the at least one first UP device meets a steering condition, the USF device determines the target UP device in the plurality of UP devices based on the user information and the load of the plurality of UP devices, where the steering condition includes: the load meets a specified second load condition, and/or a device status changes; and that the USF device indicates to enable the target terminal to access the target UP device includes: the USF device indicates to steer at least one online target terminal on the first UP device that meets the steering condition to the target UP device. According to this design, dynamic user steering is performed between the plurality of UP devices, so that the load balancing between the plurality of UP devices is implemented.

When a UP device goes online or offline, a vBNG network topology is affected, affecting a service related to an online terminal. In a possible design, that the device status of the first UP device changes may include either or both of the following: the first UP device goes pre-offline or goes offline due to a fault; or the first UP device initially goes online or resumes going online. According to this design, it may be set as that a steering condition is triggered when a device status of any UP device in the plurality of UP devices changes, to trigger the USF device to make a steering decision for the plurality of UP devices, so that the load balancing between the plurality of UP devices is implemented through load sharing between the UP devices. It should be noted that, in this embodiment of this application, for different cases in which the status of the UP device changes, a load sharing related algorithm may be further correspondingly modified or adjusted, to improve accuracy of the algorithm. For adjustment of the related algorithm, refer to related descriptions in the specific implementation part. Details are not described herein again.

In this embodiment of this application, when the first UP device that meets the steering condition accesses a plurality of online target terminals, for example, based on a plurality of granularities such as a UP device, an interface, and an address segment, steering decisions and steering operations on the plurality of target terminals may be implemented. For example, that the USF device indicates to steer at least one online target terminal on the first UP device that meets the steering condition to the target UP device may include: The USF device indicates to steer a plurality of online target terminals that are on a same interface and/or in a same internet protocol IP address segment on the first UP device that meets the steering condition to a same target UP device or different target UP devices. Alternatively, for example, that the USF device indicates to steer a plurality of online target terminals that are on a same interface and/or in a same IP address segment on the first UP device that meets the steering condition to a same target UP device includes: The USF device indicates to steer the plurality of online target terminals that are on the same interface and/or in the same IP address segment on the first UP device that meets the steering condition to a same target interface and/or a same target internet protocol IP address segment on the target UP device. According to this design, the steering decision is made for the plurality of target terminals based on the plurality of granularities such as the UP device, the interface, and the IP address segment. This helps reduce decision-making time and steering operation time.

In this embodiment of this application, the USF device may have a plurality of product forms. This is not limited in this application. For example, the network system may further include a software-defined networking SDN controller. The USF device may be configured in the CP device; the USF device may be configured in the SDN controller; or the USF device may be a device independent of the CP device and the SDN controller. It should be noted that when the USF device has different forms, correspondingly, processes of interaction between the USF device and another device in the network system are different. Correspondingly, manners of obtaining information required by the target terminal to make the steering decision may also be different, and specific implementation of processes in which the USF device indicates to enable the target terminal to access the target UP device are also different. This is not limited in this application.

In an example, if the USF device is configured in the CP device, the USF device may obtain the user information of the target terminal, access line information, the load of the plurality of UP devices, device status information of the plurality of UP devices, steering indication information, device information of the target UP device, and the like through the CP device. The steering indication information is used to indicate that the at least one first UP device in the plurality of UP devices meets the steering condition. The USF device may further send a steering instruction to the SDN controller through the CP device, where the steering instruction carries the access line information of the target terminal and the device information of the target UP device, and the steering instruction is used to instruct the SDN controller to enable, through a steering function SF device based on the access line information and the device information, the target terminal to access the target UP device.

In an example, if the USF device is configured in the SDN controller, the USF device may receive the user information of the target terminal, access line information, the load of the plurality of UP devices, device status information of the plurality of UP devices, steering indication information, device information of the target UP device, and the like from the CP device. The steering indication information is used to indicate that the at least one first UP device in the plurality of UP devices meets the steering condition. The USF device may indicate, through the SDN controller, to enable the target terminal to access the target UP device.

In an example, if the USF device is the device independent of the CP device and the SDN controller, that the USF device obtains user information of a target terminal includes: The USF device receives the user information from the CP device; and the method further includes: the USF device receives, from the CP device, any one or more of the following: the load of the plurality of UP devices, device status information of the plurality of UP devices, and steering indication information, where the steering indication information is used to indicate that the at least one first UP device in the plurality of UP devices meets the steering condition; and that the USF device indicates to enable the target terminal to access the target UP device includes: the USF device indicates the SDN controller to enable the target terminal to access the target UP device.

In this embodiment of this application, if the USF device is the device independent of the CP device and the SDN controller, that the USF device indicates the SDN controller to enable the target terminal to access the target UP device may include: The USF device sends a steering instruction to the SDN controller, where the steering instruction carries access line information of the target terminal and device information of the target UP device, and the steering instruction is used to instruct the SDN controller to control, through a steering function SF device based on the access line information of the target terminal and the device information of the target UP device, the target terminal to access the target UP device; and the method may further include: the USF device sends steering information to the CP device, where the steering information is used to indicate the target UP device corresponding to the target terminal and the device information of the target UP device.

In this embodiment of this application, the access line information is carried in the dialup protocol packet sent by the target terminal through the SF device, and the access line information includes a media access control MAC address of the target terminal, a device identifier of an access network AN device, port information of a port (namely, a port of the target terminal) that is in the AN device and that is connected to the SF device, and virtual local area network VLAN information corresponding to the target terminal; and the device information of the target UP device includes a device identifier of the target UP device, interface information of a target interface of the target UP device, and a network identifier of a virtual extensible local area network VXLAN corresponding to the target interface. Based on the access line information of the target terminal and the device information of the target UP device, the SF device may finally map the port, the VLAN information, and the like of the target terminal to a layer-2 tunnel corresponding to the target UP device, so that the target terminal accesses the target UP device.

According to a second aspect, an embodiment of this application provides a method for accessing a gateway. The method may be applied to a network system including a virtual broadband network gateway vBNG. The vBNG includes a control plane CP device and a plurality of UP devices managed by the CP device. Any UP device in the plurality of UP devices may be a physical UP device or a virtual UP device. The network system may further include a user plane steering function USF device.

The method may be performed by the UP device. In the method, any UP device in the plurality of UP devices may send load and/or device status information of the UP device to the CP device, where the load and/or the device status information are/is used by the USF device to determine a target UP device in the plurality of UP devices based on the load and/or the device status information obtained from the CP device, and indicate to enable a target terminal to access the target UP device.

In a possible design, the any UP device sends the load and/or the device status information of the UP device to the CP device based on a predetermined time period; and/or the any UP device sends the load and/or the device status information of the UP device to the CP device when meeting a specified condition.

According to the foregoing design, the any UP device may report the load and/or the device status information of the UP device to the CP device, so that the CP device sends related information to the USF device, and the USF device makes a steering decision. This helps implement load balancing between the plurality of UP devices.

In a possible design, the specified condition includes: a status of the any UP device changes and/or the load of the any UP device changes.

In a possible design, that the status of the any UP device changes includes either or both of the following: the any UP device goes pre-offline or goes offline due to a fault; or the UP device initially goes online or resumes going online; and that the load of the any UP device changes includes: the load of the any UP device meets a specified load condition.

According to a third aspect, an embodiment of this application provides a method for accessing a gateway. The method may be applied to a network system including a virtual broadband network gateway vBNG. The vBNG includes a control plane CP device and a plurality of UP devices managed by the CP device. Any UP device in the plurality of UP devices may be a physical UP device or a virtual UP device. The network system may further include a user plane steering function USF device.

The method may be performed by the CP device. In the method, the CP device may receive load and/or device status information of the any UP device from the any UP device in the plurality of UP devices; and the CP device may send the load and/or the device status information of the any UP device to the USF device, where the load and/or the device status information are/is used by the USF device to determine a target UP device in the plurality of UP devices based on the load and/or the device status information, and indicate to enable a target terminal to access the target UP device.

In a possible design, the CP device sends user information of the target terminal to the USF device, where the user information is used by the USF device to determine the target UP device in the plurality of UP devices based on the user information and the load and/or the device status information.

In a possible design, the enabling a target terminal to access the target UP device includes steering an online target terminal to the target UP device, and the method further includes: The CP device sends steering indication information to the USF device, where the steering indication information is used to indicate that at least one UP device in the plurality of UP devices meets a steering condition, and the steering indication information is used by the USF device to determine, based on the steering indication information, whether to steer at least one online target terminal on the at least one UP device that meets the steering condition to the target UP device; and the steering condition includes: the load meets a specified load condition, and/or a device status changes.

In a possible design, that the device status of the at least one UP device changes includes: The at least one UP device goes pre-offline or goes offline due to a fault, or the at least one UP device initially goes online or resumes going online.

According to a fourth aspect, an embodiment of this application provides an apparatus for accessing a gateway. The apparatus may be used in a network system including a virtual broadband network gateway vBNG. The vBNG includes a control plane CP device and a plurality of UP devices managed by the CP device. Any UP device in the plurality of UP devices may be a physical UP device or a virtual UP device. The network system may further include a user plane steering function USF device. The apparatus for accessing a gateway has functions of implementing behavior of the method for accessing gateway in the first aspect, the second aspect, or the third aspect. The apparatus for accessing a gateway may be the USF device, the UP device, or the CP device in the network system. The apparatus includes at least one module, and the at least one module is configured to implement the method for accessing a gateway provided in the first aspect, the second aspect, or the third aspect.

According to a fifth aspect, an embodiment of this application provides an apparatus for accessing a gateway. The apparatus includes at least one processor. The at least one processor is coupled to at least one memory, and the at least one processor is configured to execute a computer program or instructions stored in the at least one memory, so that the apparatus performs the method according to any one of the first aspect, the second aspect, or the third aspect or the possible designs of the first aspect, the second aspect, or the third aspect. Optionally, the apparatus further includes a communication interface, and the processor is coupled to the communication interface. The communication interface may be a transceiver or an input/output interface. When the apparatus is a chip included in a network device, the communication interface may be an input/output interface of the chip. Optionally, the transceiver may be a transceiver circuit, and the input/output interface may be an input/output circuit.

According to a sixth aspect, an embodiment of this application provides a readable storage medium. The readable storage medium is configured to store instructions. When the instructions are executed, the method according to the first aspect is implemented, or the method according to the second aspect is implemented, or the method according to the third aspect is implemented.

According to a seventh aspect, a computer program product including instructions is provided. When the computer program product runs on a computer, the computer is enabled to perform the method for accessing a gateway according to the first aspect, the second aspect, or the third aspect.

According to an eighth aspect, an embodiment of this application provides a chip system. The chip system includes a processor. The processor is coupled to a memory. The memory is configured to store a program or instructions. The chip system may further include an interface circuit. The interface circuit is configured to receive code instructions and transmit the code instructions to the processor. When the processor executes the program or the instructions, the chip system is enabled to implement the method according to any possible design of the first aspect, the second aspect, or the third aspect.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

According to a ninth aspect, an embodiment of this application provides a network system. The network system includes a virtual broadband network gateway vBNG and a user plane steering function USF device, and the vBNG includes a control plane CP device and a plurality of UP devices managed by the CP device. The USF device may perform the method according to the first aspect; any UP device in the plurality of UP devices may perform the method according to the second aspect; and the CP device may perform the method according to the third aspect.

In this application, on the basis of the implementations provided in the foregoing aspects, the implementations may be further combined to provide more implementations.

**BRIEF DESCRIPTION OF DRAWINGS**

FIG. 1 is a diagram of an architecture of a network system to which a method for accessing a gateway is applicable according to an embodiment of this application;

FIG. 2 is a schematic diagram of a structure of a network device according to an embodiment of this application;

FIG. 3 is a schematic flowchart of a method for accessing a gateway according to an embodiment of this application;

FIG. 4 is a schematic flowchart of obtaining user information of a target terminal according to an embodiment of this application;

FIG. 5A to FIG. 5D are schematic diagrams in which a USF device makes a steering decision;

FIG. 6 is a schematic flowchart of a method for accessing a gateway in a scenario in which a target terminal requests to go online according to an embodiment of this application;

FIG. 7 is a schematic flowchart of a method for accessing a gateway in a scenario in which a user is online according to an embodiment of this application;

FIG. 8 is a schematic diagram of a structure of an apparatus for accessing a gateway according to an embodiment of this application;

FIG. 9 is a schematic diagram of another structure of an apparatus for accessing a gateway according to an embodiment of this application; and

FIG. 10 is a schematic diagram of another structure of an apparatus for accessing a gateway according to an embodiment of this application.

**DESCRIPTION OF EMBODIMENTS**

Before embodiments of this application are described in detail, a system architecture in embodiments of this application is first described.

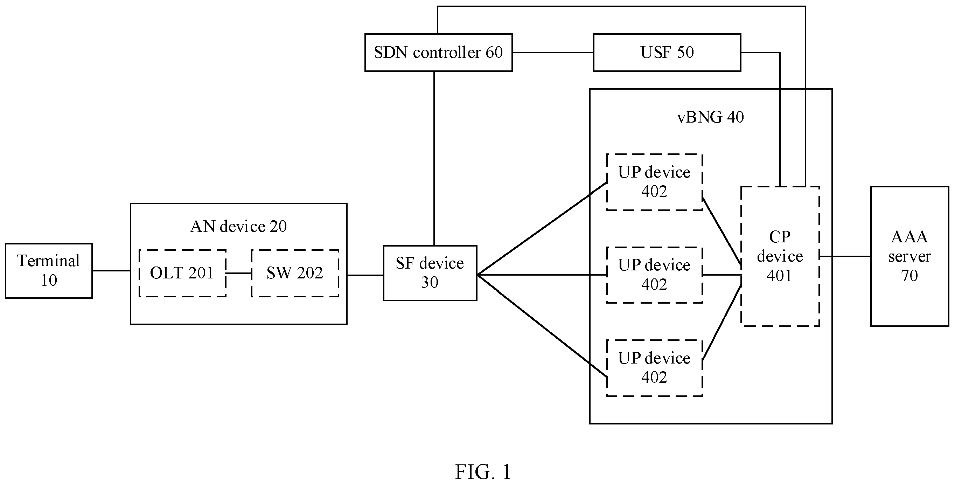

FIG. 1 is a diagram of an architecture of a network system to which a method for accessing a gateway is applicable according to an embodiment of this application. As shown in FIG. 1, the system includes a terminal 10, an access network (access network, AN) device 20, a steering function (steering function, SF) device 30, a vBNG 40, a user plane steering function (user plane steering function, USF) device 50, an SDN controller 60, and an authentication, authorization, and accounting (authentication authorization accounting, AAA) server 70.

The terminal 10 may be user equipment, for example, a smartphone, a desktop computer, a portable computer, or a tablet computer, that is directly connected to the AN device 20.

Alternatively, the terminal 10 may be a residential gateway (residential gateway, RGW). When the terminal 10 is an RGW, the RGW may be connected to a plurality of user equipments such as a smartphone, a desktop computer, and a portable computer, and the plurality of user equipments are connected to the RGW. In this case, the RGW may perform network address translation (network address translation, NAT) processing on accessed user equipment, and allocate a private IP address to the user equipment such as a smartphone, a desktop computer, or a portable computer in a home. In addition, the RGW may communicate with the AN device 20, and perform point-to-point protocol over ethernet (point-to-point protocol over ethernet, PPPoE) dialup, internet protocol over ethernet (internet protocol over ethernet, IPoE) dialup, and the like through the AN device 20, to obtain an IP address from the vBNG 40, to access the vBNG 40 based on the obtained IP address. In this way, after the RGW accesses the vBNG 40, the user equipment that accesses the RGW may access the vBNG 40 through the RGW, to perform network access.

It should be understood that in embodiments of this application, the terminal 10 may also be referred to as a user. The user may be user equipment, for example, a smartphone, a desktop computer, a portable computer, or a tablet computer, that is directly connected to the access network device. If a plurality of user equipments such as a smartphone, a desktop computer, and a portable computer access the RGW, the user refers to the RGW. In the following, for ease of differentiation, a terminal for which the USF device makes a steering decision may be referred to as a target terminal or a target user. If the terminal 10 is online through access to a gateway by a UP device, the terminal may also be referred to as an online target terminal or an online target user.

There may be a layer-1 network between the UP device in the vBNG 40 and the AN device 20. The terminal 10 may perform dialup through the AN device 20, to interact with a CP device in the vBNG 40. The AN device 20 may include an optical line termination (optical line termination, OLT) 201 and/or a switch (switch, SW) 202. When the AN device includes the OLT 201 and the SW 202, the OLT 201 may separately communicate with the terminal 10 and the SW 202. For example, the OLT 201 may receive a dialup protocol packet and a data packet that are sent by the terminal 10, and forward the received packets to the SW 202. In addition, the OLT 201 may further receive information returned by the SW 202, and forward the received information to the terminal 10.

There may be a layer-2 network between the UP device in the vBNG 40 and the AN device 20. The AN device 20 may directly transmit the dialup protocol packet to the UP device in the vBNG 40 through a virtual local area network (virtual local area network, VLAN). Alternatively, the SF device 30 may be disposed after the AN device 20, and a layer-2 tunnel is established between the SF device 30 and the UP device in the vBNG 40. A physical interface accessed by the SF device 30 and the AN device 20 is divided into different sub-interfaces, the different sub-interfaces match different VLAN/QINQ ranges, and the different sub-interfaces correspond to different Layer-2 tunnels. When the terminal requests to go online (going-online), the SF device 30 sends a dialup protocol packet of the terminal 10 to the CP device for processing through a service channel, performs home terminal aggregation, aggregates the terminal 10 to a UP, forwards a layer-2 packet, and performs VLAN/QINQ isolation on the terminal 10. Each terminal 10 exclusively uses a VLAN/QINQ. After making the steering decision, the USF device may deliver a steering instruction to the SDN controller, where the steering instruction includes a steering policy. Further, the SDN controller may deliver the policy to the SF device 30, and the SF device 30 can map, based on the corresponding steering policy received from the SDN controller, a port and a VLAN/QINQ of the to-be-steered terminal 10 to a layer-2 tunnel (VXLAN/VLL/EVPN) connected to a corresponding target UP device, so that the terminal 10 is connected to a network by accessing the target UP device.

The vBNG 40 may include a CP device 401 and a plurality of UP devices 402. The CP device 401 is a vBNG service control plane, and the UP device 402 is a vBNG service forwarding plane. One CP device 401 may manage a plurality of UP devices 402. The CP device 401 may be used as a virtual network function (virtual network function, VNF) unit, and run on a server to implement virtualization. The UP device 402 may have two forms, and may run on a server as a VNF unit, namely, a virtual UP device (virtual User Plane, vUP), or may be a conventional physical network function (PNF) device, namely, a physical UP device (physic user plane, pUP). One CP device 401 may manage a plurality of pUP devices and/or vUP devices.

Three types of interfaces may be included between the CP device 401 and the UP device 402, for example, a service interface PRi, a management interface Mi, and a control interface SCi. The service interface PRi may be a vxlan-GPE interface. If the dialup protocol packet of the terminal 10 is forwarded through a default UP device, after receiving the dialup protocol packet of the terminal 10, the default UP device may encapsulate the dialup protocol packet through the PRi interface, and then send the dialup protocol packet to the CP device 401 for processing. The management interface Mi may be a netconf interface. The CP device 401 may deliver a configuration to the UP device 402 through the Mi interface. The UP device 402 may alternatively report some information related to a running status of the UP device to the CP device 401 through the Mi interface. The control interface SCi may be a CUSP interface. After processing the dialup protocol packet of the terminal 10, the CP device 401 completes protocol interaction of the terminal 10. After the terminal 10 goes online, the CP device 401 may deliver user entry information to the corresponding UP device 401 through the SCi interface.

As shown in FIG. 1, the CP device 401 may establish a communication connection to each of the SF device 30, the USF device 50, the SDN controller 60, and the AAA server 70. The CP device 401 can interact with the SF device 30 to receive and process a dialup protocol packet of a user from the SF device 30, may further interact with the AAA server 70 to perform user authentication, accounting, and authorization, and may further exchange related information of the plurality of UP devices with the USF device and receive the steering policy from the USF device.

Specifically, for example, when the terminal 10 requests to go online (going-online), the SF device 30 may forward the dialup protocol packet of the terminal 10 to the CP device directly or through the default UP device. After receiving the dialup protocol packet of the terminal 10, the CP device 401 parses the dialup protocol packet, to obtain access line information and dialup authentication information of the terminal 10 from the dialup protocol packet. The access line information may include, for example, a media access control MAC address of the terminal 10, a device identifier of the access network AN device, port information of a port that is in the AN device and that is connected to the SF device, and virtual local area network VLAN information corresponding to the target terminal. The dialup authentication information may include, for example, a user name, a password, and the like from the terminal 10, and may be used to perform user authentication, accounting, authorization, and the like on the terminal 10. The CP device may use the method for accessing a gateway provided in embodiments of this application, for example, notify, based on an SLA level of the terminal 10, the USF device that the terminal 10 goes online, and wait for the USF device to guide the terminal 10 to perform steering, to map the port information of the port of the terminal 10, the VLAN information, and the like to the layer-2 tunnel accessed by the corresponding target UP device (for example, a UP 2), to control the terminal 10 to access one most appropriate UP device 402 in the plurality of UP devices 402.

If the terminal 10 has become an already-online (already-online) terminal through access to a gateway by the UP device, the USF device may obtain related information in a process of interacting with another device in the system, and make a steering decision for an online target terminal. Correspondingly, the USF device may deliver a steering policy to the CP device 401, so that the CP device 401 controls the online target terminal that has successfully accessed the UP device 402 to steer to the target UP device, to implement load sharing between the plurality of UP devices.

Specifically, for example, any UP device in the plurality of UP devices may send load and/or device status information of the UP device to the CP device, where the load and/or the device status information are/is used by the USF device to determine the target UP device in the plurality of UP devices based on the load and/or the device status information obtained from the CP device, and indicate to enable the target terminal to access the target UP device. It may be understood that, during specific implementation, the CP device may send any one or more of the following to the USF device: load of the plurality of UP devices, device status information of the plurality of UP devices, and steering indication information, where the steering indication information is used to indicate that at least one first UP device in the plurality of UP devices meets a steering condition, and the steering condition includes: the load meets a specified second load condition, and/or a device status changes. The SDN controller may also monitor each UP device, and for example, may report the steering indication information to the USF device. The USF device may make a steering decision based on the received information, and determine, through corresponding calculation, an online target terminal to be steered and a target UP device to which the online target terminal is to be steered, to guide dynamic user steering between the plurality of UP devices managed by the CP device, so that load balancing between the plurality of UP devices is implemented.

In addition, in embodiments of this application, the CP device may alternatively determine, based on load and/or device status information received from the plurality of UP devices, whether any managed UP device meets a specified steering condition, and send steering indication information to the USF device when there is a UP device that meets the steering condition, where the steering indication information is used to indicate that at least one UP device in the plurality of UP devices meets the steering condition, the steering indication information is used by the USF device to determine, based on the steering indication information, whether to steer at least one online target terminal on the at least one UP device that meets the steering condition to the target UP device, and the steering condition includes: the load meets a specified load condition, and/or a device status changes. That the device status of the at least one UP device changes may include: The at least one UP device goes pre-offline or goes offline due to a fault, or the at least one UP device initially goes online or resumes going online. Details are described below with reference to a flowchart, and are not described herein again.

The UP device 402 may be separately connected to the CP device 401 and the SF device 30. After determining, by using the method for accessing a gateway provided in embodiments of this application, the target UP device to be accessed for the terminal 10, the USF device notifies the CP device, and the CP device may send the user entry information to the determined target UP device. The UP device 402 may receive the user entry information sent by the CP device 401, locally generate a forwarding entry of the terminal 10, perform related service policy execution and traffic forwarding, and advertise a route. After being configured, the SF device may map related information of the terminal 10 to the layer-2 tunnel corresponding to the target UP device, to enable the terminal 10 to access the target UP device.

Any UP device in the plurality of UP devices may also send the load and/or the device status information of the any UP device to the CP device, so that the CP device reports some status-related information of the UP device to the USF device to make the steering decision. The any UP device sends the load and/or the device status information of the any UP device to the CP device based on a predetermined time period; and/or the any UP device may send the load and/or the device status information of the any UP device to the CP device when the specified condition is met. The specified condition may include: a status of the any UP device changes. For example, that the status of the any UP device changes includes either or both of the following: the any UP device goes pre-offline or goes offline due to a fault; or the UP device initially goes online or resumes going online. The specified condition may alternatively include: the load of the any UP device changes. For example, the load of the any UP device meets the specified load condition. A reporting occasion or specific reporting content of the UP device is not limited in this application.

The USF device 50 is a steering decision control functional entity. For example, the USF device may make a steering decision and generate a steering policy based on related information that is of the plurality of UP devices managed by the CP device and that is reported by the CP device, and notify the CP device 401, the SDN controller 60, and the SF device 30 to steer the target terminal, to implement load balancing between the plurality of UP devices. In addition, the USF device may also receive, from the SDN controller 60, monitoring information obtained through monitoring performed by the SDN controller 60 on the plurality of UP devices, and generate the steering policy with reference to the monitoring information to guide user steering. For related descriptions of the steering decision of the USF device 50, refer to related descriptions of the following specific implementations. Details are not described herein again.

The USF device 50 may have a plurality of product forms. For example, the USF device 50 may be configured on the CP device 401, or may be configured on the SDN controller 60. Alternatively, the USF device 50 may be a device independent of the CP device 401 and the SDN controller 60. This is not limited in this application. If the USF device 50 is configured on the SDN controller 60 or is the device independent of the CP device 401 and the SDN controller 60, one USF device may also communicate with CP devices in a plurality of vBNGs 40 and exchange steering policies. This is not limited in this application.

If the USF device is the device independent of the CP device 401 and the SDN controller 60, the SDN controller 60 may communicate with the CP device 401 in the vBNG 40, and may further communicate with the SF device 30 and the USF device 50. The USF device 50 may make steering decisions for the plurality of UP devices managed by the CP device and terminals that are separately connected to the plurality of UP devices. After determining the target UP device 402 for the terminal 10, the USF device may send the steering information to the CP device 401, to indicate, to the CP device 401, the target UP device 402 to which the terminal 10 is to be steered and device information of the target UP device 402.

In addition, the USF device may deliver a steering instruction to the SDN controller, where the steering instruction may carry the access line information of the terminal 10 and the device information of the target UP device, to instruct the SDN controller to control, based on the received access line information of the terminal 10 and the received device information of the target UP device, the terminal 10 to access the target UP device. After receiving the steering instruction of the USF device, the SDN controller 60 may configure the SF device 30 based on the access line information of the terminal 10 and the device information of the target UP device, so that the SF device 30 maps the information such as the port and the VLAN/QINQ of the terminal 10 to the layer-2 tunnel (VXLAN/VLL/EVPN) connected to the target UP device. During specific implementation, the SDN controller and the SF device may alternatively exchange the steering instruction or the steering policy with the SF device through the SDN controller to configure the SF device. This is not limited in this application.

If the USF device is configured in the CP device, the SDN controller 60 may communicate with the CP device 401 in the vBNG 40, and may further communicate with the SF device 30. The USF device may obtain the user information of the terminal 10, the access line information, the load of the plurality of UP devices, the device status information of the plurality of UP devices, the device information of the target UP device, and the like through the CP device. The USF device may alternatively send a steering instruction to the SDN controller through the CP device, where the steering instruction carries the access line information of the terminal 10 and the device information of the target UP device, and the steering instruction is used to instruct the SDN controller to enable, through the steering function SF device based on the access line information and the device information, the terminal 10 to access the target UP device.

If the USF device is configured in the SDN controller, the SDN controller 60 may communicate with the CP device 401 in the vBNG 40, and may further communicate with the SF device 30. The USF device may receive user information of the terminal 10, the access line information, the load of the plurality of UP devices, the device status information of the plurality of UP devices, the device information of the target UP device, and the like from the CP device through the SDN controller. The USF device may indicate, through the SDN controller, the steering function SF device to enable the target terminal to access the target UP device.

The SDN controller 60 may communicate with the CP device 401 included in the vBNG 40. After selecting the corresponding target UP device for the terminal 10, the USF device 50 may deliver the steering instruction to the SDN controller, so that the SDN controller can control the terminal 10 to access the corresponding UP device 402. Specifically, the steering instruction delivered by the USF device to the SDN controller may include the access line information of the terminal 10 and the device information of the target UP device. The SDN controller may configure the SF device based on the received access line information and the received device information, so that the SF device maps related information of the terminal 10 to the layer-2 tunnel corresponding to the target UP device, and the terminal 10 accesses the target UP device.

The AAA server 70 may communicate with the CP device 401 in the vBNG 40. The AAA server may receive the dialup authentication information of the terminal 10 sent by the CP device 401, and perform authentication, authorization, and accounting on the terminal 10 based on the dialup authentication information. The CP device may obtain the SLA level of the terminal 10 based on the dialup authentication information of the terminal 10. In addition, in embodiments of this application, the AAA server 70 may further determine, based on the dialup authentication information of the terminal 10, the SLA level corresponding to the terminal 10, and feed back the SLA level to the CP device 401, so that the CP device 401 and the USF device make the steering decision to select the corresponding target UP device for the terminal 10, and the terminal 10 can access the corresponding target UP device.

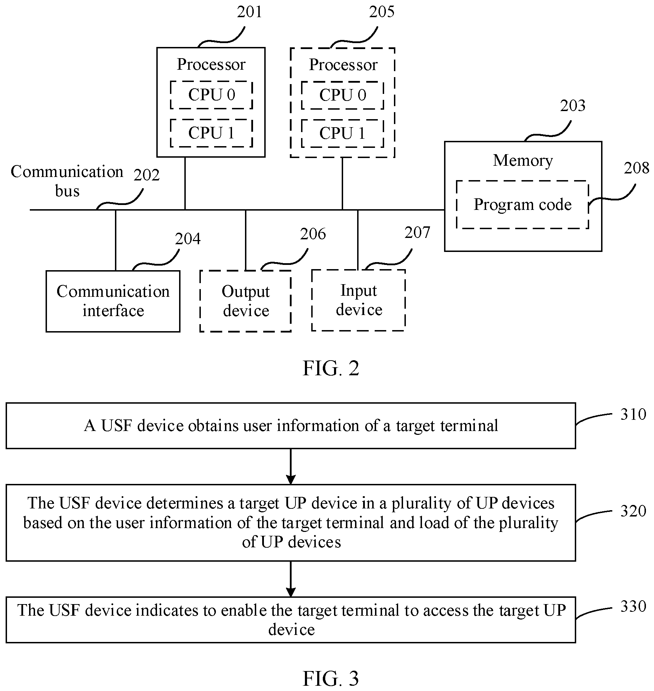

FIG. 2 is a schematic diagram of a structure of a network device according to an embodiment of the present invention. The USF device, the vBNG, the SDN controller, the SF device, and the like in FIG. 1 may be implemented through the network device shown in FIG. 2. Refer to FIG. 2. The network device includes at least one processor 201, a communication bus 202, a memory 203, and at least one communication interface 204.

The processor 201 may be a general-purpose central processing unit (Central Processing Unit, CPU), a microprocessor, an application-specific integrated circuit (application-specific integrated circuit, ASIC), or one or more integrated circuits configured to control program execution in the solutions of this application.

The communication bus 202 may include a path for information transmission between the foregoing components.

The memory 203 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium capable of carrying or storing expected program code in an instruction form or a data structure form and capable of being accessed by a computer. However, the memory 203 is not limited thereto. The memory 203 may exist independently, and is connected to the processor 201 through the communication bus 202. The memory 203 may alternatively be integrated with the processor 201.

The communication interface 204 uses any apparatus such as a communication module, and is configured to communicate with another device or a communication network such as an ethernet, a radio access network (RAN), or a wireless local area network (Wireless Local Area Network, WLAN).

During specific implementation, in an embodiment, the processor 201 may include one or more CPUs, for example, a CPU 0 and a CPU 1 shown in FIG. 2.

During specific implementation, in an embodiment, the network device may include a plurality of processors, for example, the processor 201 and a processor 205 shown in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device may further include an output device 206 and an input device 207. The output device 206 communicates with the processor 201, and may display information in a plurality of manners. For example, the output device 206 may be a liquid crystal display (liquid crystal display, LCD), a light emitting diode (light emitting diode, LED) display device, a cathode ray tube (cathode ray tube, CRT) display device, or a projector (projector). The input device 207 communicates with the processor 201, and may receive an input from a user in a plurality of manners. For example, the input device 207 may be a mouse, a keyboard, a touchscreen device, a sensing device, or the like.

The network device may be a general-purpose computer device or a dedicated computer device. During specific implementation, the network device may be a desktop computer, a network server, a wireless terminal device, a communication device, or an embedded device. A type of the network device is not limited in embodiments of the present invention.

The following describes a method for accessing a gateway provided in an embodiment of this application.

FIG. 3 is a schematic flowchart of a method for accessing a gateway according to an embodiment of this application. The method is applicable to the USF device shown in FIG. 1. As shown in FIG. 3, the method for accessing a gateway may include the following steps.

S310: The USF device obtains user information of a target terminal.

In this embodiment of this application, the target terminal may be a terminal that requests to go online (going-online), or may be an online terminal that has successfully accessed a gateway and is already online (already-online), or may be one terminal, or may include two or more terminals. When the target terminal includes a plurality of terminals, the plurality of terminals may be a plurality of terminals that request to go online, or may be a plurality of online terminals. Alternatively, when the target terminal includes a plurality of terminals, one part of the plurality of terminals may be terminals that request to go online, and the other part of the plurality of terminals may be online terminals. This is not limited in this application.

The user information of the target terminal may be any information that is related to the target terminal and that facilitates the USF device to make a steering decision. The user information may be locally stored in the USF device, or may be obtained by the USF device in a process of interacting with another device, module, or functional component in a system. This is not limited in this application.

For example, when the target terminal is a terminal that requests to go online, the target terminal may perform dialup through an SF device, to interact with a CP device. Correspondingly, the CP device may obtain the user information of the target terminal in a process of interacting with the target terminal, and send the user information of the target terminal to the USF device. When the target terminal is an online target terminal, any UP device in a plurality of UP devices managed by the CP device may separately send, to the CP device, user information of an online target terminal that successfully accesses the any UP device, and the CP device sends the user information of the online target terminal to the USF device. Alternatively, an SDN controller may monitor a plurality of UP devices managed by the CP device, and the USF device may receive, from the SDN controller, monitoring information obtained through monitoring performed by the SDN controller on the plurality of UP devices, where the monitoring information may include the user information of the target terminal. It should be noted that, this is merely an example for describing a manner of obtaining the user information of the target terminal herein, but is not any limitation.

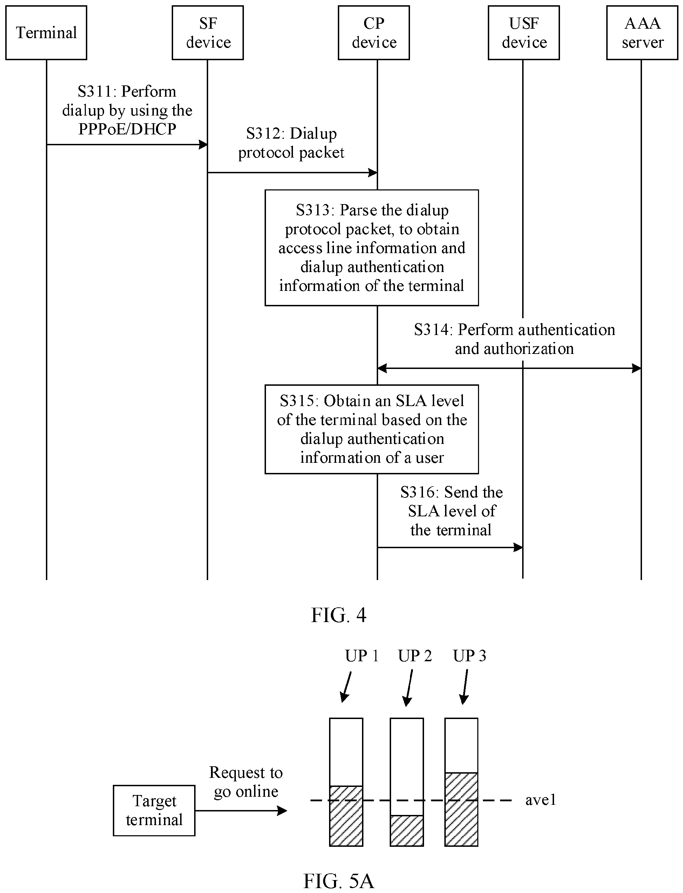

In a possible design, the user information of the target terminal may include a service level agreement (Service Level Agreement, SLA) level of the target terminal. The CP device may obtain the SLA level in a process of interacting with the target terminal that requests to go online, and send the SLA level to the USF device. The USF device determines, based on the SLA level, a target UP device corresponding to the target terminal. This helps ensure performance and reliability of a related service after the target terminal is online. If the user information of the target terminal is the SLA level of the target terminal, as shown in FIG. 4, S310 may be implemented by using the following steps.

S311: The terminal may perform dialup by using the PPPoE or the like, and send a dialup protocol packet.

S312: The SF device receives the dialup protocol packet of the terminal, and directly sends the dialup protocol packet to the CP device. The SF device may directly send the dialup protocol packet to the CP device, or may send the dialup protocol packet to the CP device through a default UP device. This is not limited in this application.

S313: The CP device parses the dialup protocol packet, to obtain access line information, dialup authentication information (for example, including a user name, a password, and the like), and the like of the terminal from the dialup protocol packet. The access line information of the terminal may be used to control the terminal to access the gateway, and the dialup authentication information may be used to perform authentication and authorization on the terminal.

S314: The CP device includes the dialup authentication information of the terminal in an authentication request, and sends the authentication request to an AAA server, so that the AAA server may perform authentication and authorization on the terminal based on the dialup authentication information.

S315: The CP device obtains the SLA level of the terminal based on the dialup authentication information of a user.

In an example, the AAA server may store a correspondence between the dialup authentication information and the SLA level. After the AAA server successfully authenticates the terminal, the AAA server may obtain, based on the dialup authentication information of the terminal, the SLA level of the terminal from the stored correspondence between the dialup authentication information and the SLA level, include the obtained SLA level in an authentication success message, and send the authentication success message to the CP device.

In another example, the CP device may store a correspondence between the dialup authentication information and the SLA level. After the AAA server successfully authenticates the terminal, the AAA server may directly send an authentication success message to the CP device. After receiving the authentication success message, the CP device obtains, based on the dialup authentication information of the terminal, the SLA level of the terminal from the correspondence that is between the dialup authentication information and the SLA level and that is stored in the CP device, and uses the obtained SLA level as the SLA level of the terminal. The authentication success message may further carry other authorization information of the terminal, for example, quality of service (quality of service, QoS) and an access control list (access control list, ACL) of the terminal. Details are not described herein again.

It should be noted that, after obtaining the SLA level of the terminal, the CP device may send accounting start information to the AAA server, to indicate the AAA server to start to perform accounting on the terminal. In addition, the CP device may allocate an IP address and corresponding domain name system (Domain Name System, DNS) information to the terminal by using a PPPoE network control protocol (Network Control Protocol, NCP).

S316: The CP device sends the SLA level of the terminal to the USF device.

It should be noted that the foregoing merely uses PPPoE dialup as an example to describe a process in which the CP device obtains the user information of the terminal. Certainly, if IPoE dialup is used, the CP device may obtain the user information in a process of interacting with the terminal during dialup such as DHCP dialup. Details are not described herein again in this embodiment of this application.

It should be noted that, the foregoing is merely an example for describing a manner of obtaining the SLA level of the target terminal, but is not any limitation. In some embodiments, if the target terminal is an online terminal that has successfully accessed, the USF device may alternatively obtain the user information such as the SLA level of the target terminal from the locally stored SLA level, to dynamically steer the online terminal. Alternatively, when the USF device needs to make a steering decision, the USF device may request to obtain the user information such as the SLA level of the target terminal from the CP device or another device in the system. This is not limited in this application. In addition, the foregoing is merely an example for describing the user information of the target terminal and a manner of obtaining the user information, but is not any limitation. In another embodiment, the user information of the target terminal may be any information that is related to the terminal and that facilitates the USF device to make a steering decision. This is not limited in this application. In addition, the user information of the target terminal obtained in different interaction phases may be different or not completely the same. This is not limited in this application either.

S320: The USF device determines a target UP device in the plurality of UP devices based on the user information of the target terminal and load of the plurality of UP devices.

In this embodiment of this application, the user information of the target terminal and the load of the plurality of UP devices may be used by the USF device to make a steering decision for the target terminal, to determine, in the plurality of UP devices, a UP device that meets a related load condition as the target UP device, to dynamically perform user steering, so that load balancing between the plurality of UP devices is implemented.

In an example, in S320, the USF device may make a steering decision for the target terminal in a scenario in which the target terminal requests to go online, to determine the target UP device that the target terminal is to access. This helps implement load balancing between different UP devices in a process in which the terminal requests to go online. In another example, in S320, the USF device may also make a steering decision for the online terminal in a scenario in which the target terminal successfully accesses the gateway and becomes an already-online (already-online) terminal, to perform dynamic user steering between the plurality of UP devices, so that load balancing between the plurality of UP devices is implemented.

The target terminal in S320 may be one, or may include two or more terminals. In a scenario in which a plurality of terminals simultaneously request to go online, the USF device may determine, one by one in a same processing manner, a corresponding target UP device for each target terminal that requests to go online, or the USF device may simultaneously make steering decisions in a same processing manner for the plurality of terminals that request to go online. If the target terminal includes a plurality of online terminals, the plurality of online terminals may include a plurality of online terminals that access a same source UP device, or may include a plurality of online terminals that respectively access different source UP devices. The USF device may alternatively make a steering decision for each online terminal one by one, or may simultaneously make steering decisions for the plurality of online terminals in a same processing manner. Specific implementation is not limited in this application.

In this embodiment of this application, load of any UP device in the plurality of UP devices may include user session load and/or traffic load. The user session load may include a quantity of user sessions, session usage, and the like. The traffic load may include bandwidth usage and the like.

During specific implementation, for the any UP device in the plurality of UP devices, the USF device may calculate device load of the UP device by using at least one item of predetermined load (for example, the foregoing user session load and/or traffic load; or a more specific quantity of user sessions, more specific session usage, more specific bandwidth usage, and the like), and use the determined device load as the load of the UP device, to further select, from the plurality of UP devices based on the load of the UP devices, a UP device that meets a specified load condition as the target UP device. The at least one item of load may be statistical information of a load status of the UP device, or may be information obtained by converting related information such as a device status of the UP device. For example, if the UP device is in a status of initially going online or a status of resuming going online, the user session load, the traffic load, and the like of the UP device are all 0. This is not limited in this application. In this embodiment of this application, a related algorithm and/or a corresponding conversion rule may be preconfigured, so that the USF device makes a steering decision in a scenario in which the terminal requests to go online and/or in a scenario in which the terminal is online. Details are respectively described below with reference to corresponding examples, and are not described herein again.

In a possible design, the plurality of UP devices in S320 may be a plurality of UP devices managed by a same CP device shown in FIG. 1, and may be pUP devices or vUP devices. The USF device may make a steering decision and perform user steering for the plurality of UP devices managed by the same CP device, to implement load balancing between the plurality of UP devices. In different cases, in S320, the USF device may determine one UP device in the plurality of UP devices as the target UP device, or may determine two or more UP devices in the plurality of UP devices as the target UP devices. This is not limited in this application either.

In another possible design, the plurality of UP devices in S320 may alternatively be at least two candidate UP devices corresponding to a same identifier or a same attribute (for example, an SLA level) in the plurality of UP devices managed by the same CP device. To be specific, when making a steering decision for the plurality of UP devices managed by the same CP device, the USF device may divide the plurality of UP devices into one or more groups based on the same identifier, the same attribute, or the like, and make a steering decision for at least two candidate UP devices in each group, to implement load balancing between the plurality of UP devices managed by the CP device through load balancing of the at least two candidate UP devices in each group.

In an example, the user information of the target terminal may be the SLA level of the target terminal, and the USF device may perform S320 by performing the following steps: The USF device determines, in the plurality of UP devices based on a correspondence between the SLA level and the UP device, at least two candidate UP devices corresponding to the SLA level; and selects, from the at least two candidate UP devices based on load of the at least two candidate UP devices, the target UP device whose load meets a specified first load condition.

Therefore, when making a steering decision based on the SLA level of the target terminal, the USF device may consider both an SLA requirement of the target terminal and load of each candidate UP device, and select, from at least two candidate UP devices corresponding to a same SLA level, a most appropriate UP device for the target terminal that requests to go online for access, or dynamically steer an online terminal between at least two candidate UP devices corresponding to a same SLA level, so that load balancing between the at least two candidate UP devices corresponding to the SLA level is implemented.

It should be noted that S320 is described in detail herein only by using an example in which the user information of the target terminal is the SLA level, but is not any limitation. When the user information is other information, S320 may alternatively be implemented in a manner the same as or similar to this example. Details are not described herein again. In addition, when the target terminal includes the plurality of terminals, the USF device may separately make steering decisions for the plurality of terminals, or may simultaneously make steering decisions for the plurality of terminals. This is not limited in this application either.

It should be noted that the correspondence between the SLA level and the UP device may be a correspondence between the SLA level and the device identifier of the UP device, and the correspondence may be preconfigured. Different SLA levels correspond to different device identifiers. In other words, in this embodiment of this application, different UP devices may be used to provide services for users at different SLA levels. For example, if an SLA level is A, a corresponding device identifier is ID 1. If an SLA level is B, a corresponding device identifier is ID 3. In this way, different SLA levels correspond to different UP devices. A same SLA level may alternatively correspond to one or more UP devices. For example, for an SLA level A, corresponding device identifiers are ID 1-1, ID 1-2, ..., and ID 1-n, where n is a positive integer greater than or equal to 2. This indicates at least two device identifiers corresponding to the SLA level A. In other words, in this embodiment of this application, one or more UP devices may be used to provide services for users at a same SLA level.

In this embodiment of this application, corresponding load conditions may be respectively specified in different cases, and each load condition helps the USF device determine, when making a steering decision, the target terminal to be steered and the target UP device to which the target terminal is to be steered, so that load balancing between the plurality of UP devices is implemented.

For ease of differentiation, in this embodiment of this application, a load condition used to determine the target UP device may be referred to as a first load condition, and a load condition used to determine a steered-out device (namely, a source UP device of an online target terminal to be steered) may be referred to as a second load condition. Details are not described below one by one. In the first/second load condition, a corresponding target UP device/steered-out device may be selected based on a specified load threshold (or threshold). For example, for any UP device, device load of the UP device may be calculated by using the at least one item of predetermined load (for example, each item of load described above), and the load condition may be a condition that the device load and the specified load threshold need to meet. Alternatively, a corresponding load threshold may be set for each item of the at least one item of predetermined load, and the load condition may include conditions that any one or more items of the at least one item of load and the corresponding specified load threshold need to meet. This is not limited in this application. In addition, the specified load threshold in each load condition may be preconfigured based on experience, or may be adjusted in real time based on running statuses of the plurality of UP devices. This is not limited in this application. In different cases, the USF device may make steering decisions based on different bases, and results of the made decisions may also vary. This is not limited in this application. In addition, if a plurality of online target terminals access the steered-out device, at least one online target terminal to be steered on the steered-out device may be further determined based on an interface, an IP address segment, and the like. The following describes in detail the steering decision made by the USF device in different cases. Details are not described herein again.

In this embodiment of this application, the USF device may obtain, in a process of interacting with another device in the system, related information for making the steering decision. The interaction process may include a process in which the USF device directly interacts with another device, or may include a process in which the USF device interacts with another device through a relay device. This is not limited in this application.

For example, the any UP device in the plurality of UP devices may send load and/or device status information of the UP device to the CP device. The CP device may send the received load and/or the received device status information of the any UP device to the USF device, so that the USF device determines the target UP device in the plurality of UP devices based on the load and/or the device status information obtained from the CP device. In this case, the CP device may be considered as a relay device between the UP device and the USF device.

Alternatively, for example, the CP device may send the user information of the target terminal to the USF device, or send steering indication information to the USF device based on the received load and/or the received device status information of the any UP device, where the steering indication information is used to indicate that at least one UP device in the plurality of UP devices meets a steering condition, and the steering indication information is used by the USF device to determine, based on the steering indication information, whether to steer at least one online target terminal on the at least one UP device that meets the steering condition to the target UP device. In this case, it is considered that the CP device directly interacts with the USF device.

S330: The USF device indicates the CP device to control the target terminal to access the target UP device.

In this embodiment of this application, the USF device may have different product forms. Refer to the system shown in FIG. 1. For example, the USF device may be configured in the CP device, or the USF device may be configured in the SDN controller, or the USF device may be a device independent of the CP device and the SDN controller. Based on different product forms of the USF device, correspondingly, during implementation of S330, processes of interaction between the USF device and other devices are also different.

In an example, if the USF device is configured in the CP device, the USF device may perform S330 by using the following step: The USF device sends a steering instruction to the SDN controller through the CP device, where the steering instruction carries access line information of the target terminal and device information of the target UP device, and the steering instruction is used to instruct the SDN controller to enable, through the steering function SF device based on the access line information and the device information, the target terminal to access the target UP device.

In an example, if the USF device is configured in the SDN controller, the USF device may perform S310 by using the following step: The USF device obtains the user information of the target terminal from the CP device. The USF device may perform S330 by using the following steps: The USF device sends steering information to the CP device through the SDN controller, where the steering information is used to indicate the target UP device corresponding to the target terminal and device information of the target UP device; and the USF device sends a steering instruction to the SF device through the SDN controller, where the steering instruction carries access line information of the target terminal and the device information of the target UP device, and the steering instruction is used to instruct the SF device to enable, through the steering function SF device based on the access line information and the device information, the target terminal to access the target UP device.

In an example, if the USF device is the device independent of the CP device and the SDN controller, the USF device may perform S310 by using the following step: The USF device obtains the user information of the target terminal from the CP device. The USF device may perform S330 by using the following steps: The USF device sends steering information to the CP device, where the steering information is used to indicate the target UP device corresponding to the target terminal and device information of the target UP device; and the USF device sends a steering instruction to the SDN controller, where the steering instruction carries access line information of the target terminal and the device information of the target UP device, and the steering instruction is used to instruct the SDN controller to perform the following step: controlling, through the steering function SF device based on the access line information of the target terminal and the device information of the target UP device that are received from the USF device, the target terminal to access the target UP device.

In the foregoing example, the access line information of the target terminal is carried in the dialup protocol packet sent by the target terminal through the SF device, and the access line information may include a media access control MAC address of the target terminal, a device identifier of an access network AN device, port information of a port that is in the AN device and that is connected to the SF device, and virtual local area network VLAN information (or QINQ) corresponding to the target terminal. The device information of the target UP device may include a device identifier of the target UP device, interface information of a target interface of the target UP device, and a network identifier of a virtual extensible local area network VXLAN (or a virtual leased line (virtual leased line, VLL), an ethernet virtual private network (ethernet virtual private network, EVPN), or the like) corresponding to the target interface. During specific implementation, the SDN controller may configure the SF device based on the access line information of the target terminal and the device information of the target UP device, so that the SF device maps information such as port information and VLAN information (or QINQ) corresponding to the target terminal to a layer-2 tunnel (for example, the VXLAN, the VLL, or the EVPN, where it may be understood that different technologies used for the layer-2 tunnel are different, and this is not limited in this application) connected to the target UP device, to complete dynamic user steering, so that the target terminal is connected to a network through the target UP device.

Therefore, according to the method procedure shown in FIG. 3, in a scenario in which the terminal requests to go online or in a scenario in which the terminal is online, the USF device may make the steering decision for the plurality of UP devices based on the user information of the target terminal and the load of the plurality of UP devices, and implement load balancing between the plurality of UP devices through load sharing between the plurality of UP devices.

In different cases, the USF device may make steering decisions based on different bases, and results of the made decisions may also vary. This is not limited in this application. With reference to FIG. 5A to FIG. 5D, the following schematically describes the steering decision made by the USF device in different cases. It should be noted that, in the following descriptions for different cases, the plurality of UP devices may refer to the foregoing plurality of UP devices managed by the same CP device, or may refer to the foregoing at least two candidate UP devices corresponding to the same identifier or the same attribute (for example, the SLA level) in the plurality of UP devices managed by the same CP device, which are not distinguished below one by one.

Scenario 1: The terminal requests to go online.

If the target terminal is currently a terminal that requests to go online (going-online), the target terminal may request, through the SF device, the CP device to go online, and the CP device may obtain the user information of the target terminal in a process of interacting with the target terminal, and may send the user information of the target terminal to the USF device, to notify the USF device that the target terminal requests to go online and request the USF device to make the steering decision for the target terminal.

Example ①: The first load condition may be set as follows: A UP device whose load is smallest is selected.

The USF device may select, from the plurality of UP devices based on the load of the plurality of UP devices, the UP device whose load is smallest as the target UP device, so that the target terminal accesses the UP device that meets a related requirement of the terminal and has the smallest load, to implement load sharing between the plurality of UP devices in the process in which the terminal goes online, and avoid overload of a specific UP device. Refer to FIG. 5A. A part filled in stripes is used to schematically represent load of a UP device, and the target UP device determined for the terminal in this manner is a UP 2.

For example, the user information of the terminal is an SLA level. The USF device may determine the UP device whose load is smallest in the following two manners.

In the first manner, session usage corresponding to each of the at least two candidate UP devices corresponding to the SLA level is obtained, and a first UP device set including a candidate UP device whose session usage is less than a specified first threshold is determined; and a second UP device set including a candidate UP device whose bandwidth usage is less than a specified second threshold is determined in the first UP device set, and a UP device whose session usage is lowest and that is determined in the second UP device set is determined as the UP device whose load is smallest.

In the second manner, the session usage and the bandwidth usage that correspond to each of the at least two candidate UP devices corresponding to the SLA level are obtained, and load of each candidate UP device is determined by using the following expression (1):

$$L_i = S*M + B*N \qquad\qquad (1)$$

$L_i$ represents load corresponding to each candidate UP device i, S and B respectively represent session usage and bandwidth usage that correspond to the candidate UP device i, M is a first weight value corresponding to the session usage S, N is a second weight value corresponding to the bandwidth usage B, and i is a device identifier. The UP device whose load is smallest is determined as the target UP device based on the calculated load of each candidate UP device.

It should be understood that the SLA level is merely used as an example for description. When making the steering decision based on the SLA level, the USF device may make the steering decision for at least two candidate UP devices corresponding to each SLA level in the plurality of UP devices managed by the same CP device, to implement load balancing between the at least two candidate UP devices. Therefore, load balancing between the plurality of UP devices managed by the CP device is implemented through load balancing between UP device groups corresponding to SLA levels. In another embodiment, the UP device whose load is smallest may alternatively be determined in the plurality of UP devices in another manner. Details are not described herein again.

Example ②: The first load condition may be set as follows: A UP device whose device load is not greater than a first value is selected, where the first value is an average value of the load of the plurality of UP devices.

When the USF device makes the steering decision for the target terminal, the USF device may select, from the plurality of UP devices based on the load of the plurality of UP devices, the UP device whose load is not greater than the average value of the load of the plurality of UP devices as the target UP device. Therefore, the target terminal can always access the gateway through the target UP device whose load does not exceed the average value of the load of the plurality of UP devices, to implement load sharing in the process in which the terminal goes online, and avoid overload of a specific UP device. Refer to FIG. 5A. A part filled in stripes is used to schematically represent load of a UP device, and the target UP device determined for the target terminal based on the average value (ave1) of the load is a UP2.

For example, the user information of the terminal is an SLA level. The USF device may determine the average value of the load of the plurality of UP devices in the following manner:

The session usage and the bandwidth usage that correspond to each of the at least two candidate UP devices corresponding to the SLA level are obtained, and load of each candidate UP device is determined by using the foregoing expression (1), and an average value of load of each candidate UP device is determined by using the following expression (2):

$$\bar{L} = \frac{\sum_i^N L_i}{N} \qquad\qquad (2)$$

$\bar{L}$ is an average value of the load of at least two candidate UP devices corresponding to the SLA level, $\sum_i^N L_i$ is total load of the at least two candidate UP devices corresponding to the SLA level, $L_i$ represents load corresponding to each candidate UP device i, and N represents a device quantity of the at least two candidate UP devices corresponding to the SLA level.

It should be understood that, this is merely an example of an algorithm for expressing the average value of the load of the plurality of UP devices according to the expressions (1) and (2) herein, but is not any limitation. In another embodiment, the average value of the load may alternatively be determined in another manner. Details are not described herein again. If the target terminal includes a plurality of terminals and the plurality of terminals simultaneously request to go online, the USF device may determine, in a same processing manner, a corresponding target UP device for each terminal that requests to go online one by one, or the USF device may simultaneously make steering decisions for the plurality of terminals in a same processing manner. Specific implementation is not limited in this application.

Scenario 2: The online terminal is steered

If the target terminal is an online terminal that has successfully accessed any source UP device managed by the CP device, the USF device may obtain, in a process of interacting with another device in the system, information required for making a steering decision, and make the steering decision for one or more online terminals based on the obtained information.

The USF device may first determine, based on the obtained information, whether the specified steering condition can be triggered. If the USF device perceives and triggers a corresponding steering condition, the USF device may make the steering decision for the online terminal based on the method shown in FIG. 3, to implement load balancing between the plurality of UP devices.

In a possible design, the specified steering condition may be related to the load of the UP device, or may be related to a device status of the UP device. For example, the steering condition may include: The load meets a specified second load condition, and/or the device status changes. In an example, the second load condition may include: The load is not less than a specified load threshold. The first UP device is used to represent any UP device in the plurality of UP devices. Before performing S320, the USF device may first determine whether at least one first UP device in the plurality of UP devices meets any one or more of the foregoing steering conditions, to determine whether to trigger the specified steering condition. Alternatively, the CP device and/or the SDN controller may determine whether any first UP device meets the steering condition, and notify the USF device in a process of interacting with the USF device, so that the USF device triggers the steering decision.

Refer to the system shown in FIG. 1. If the USF device is the device independent of the CP device and the SDN controller, when the system runs, the USF device may interact with the CP device and/or the SDN controller, to obtain related information such as respective load and/or device statuses of the plurality of UP devices, and make the steering decision for the online terminal between the plurality of UP devices based on the related information, so that load balancing between the plurality of UP devices can be implemented after the online terminal is dynamically steered.

The following uses an example in which the steering condition is set based on the load and/or the device status of the UP device to describe the steering decision of the USF device in different cases.

Case (1): The device status of the first UP device changes. For example, the first UP device is a UP device that goes offline due to a fault or a UP device that goes pre-offline. Herein, going pre-offline may mean that the UP device needs to be configured to go offline due to a network topology requirement, and may be a preparation phase before the UP device goes offline, so that the online target terminal that accesses the UP device is steered to another UP device in advance, to ensure a related service of the online target terminal.

Example ③: If the USF device determines, in a process of interacting with the CP device and/or the SDN controller, that a device status of any source UP device managed by the CP device changes, where for example, the source UP device is a UP device that goes offline due to a fault or a UP device that goes pre-offline, the USF device may determine that the source UP device is a first UP device that meets the specified steering condition, and need to trigger steering, to share, with another UP device (a UP device other than the first UP device in the plurality of UP devices, namely, a second UP device), one or more online terminals that access the first UP device, to ensure related services of these online terminals.

In this case, the USF device uses the first UP device as a steered-out device, uses one or more online terminals that have successfully accessed the first UP device as target terminals, makes a steering decision based on load of the second UP device in the plurality of UP devices and the manner in Example ① or Example ②, and separately determines, in the second UP device, the target UP device for the online target terminals on the steered-out device.

It should be noted that, in a case in which the first UP device goes offline due to a fault or goes pre-offline, when the USF device makes a steering decision in the manner in Example ②, and when calculating the average value of the load of the plurality of UP devices, statistics collection on load of the first UP device is only performed, and statistics collection on a quantity of first UP devices is not performed. For example, the user information of the terminal is the SLA level, and the foregoing expression (2) is modified to the following expression (3):

$$\overline{L}' = \frac{\sum_i^N L_i}{N - j} \tag{3}$$

N represents a device quantity of the at least two candidate UP devices corresponding to the SLA level, j represents a quantity of first UP devices that go offline due to a fault or go pre-offline in the N candidate UP devices, $L_i$ represents device load corresponding to each candidate UP device i, $\sum_i^N L_i$ is total load of the at least two candidate UP devices corresponding to the SLA level, and $\overline{L}'$ is an updated average value of the load of the at least two candidate UP devices corresponding to the SLA level.

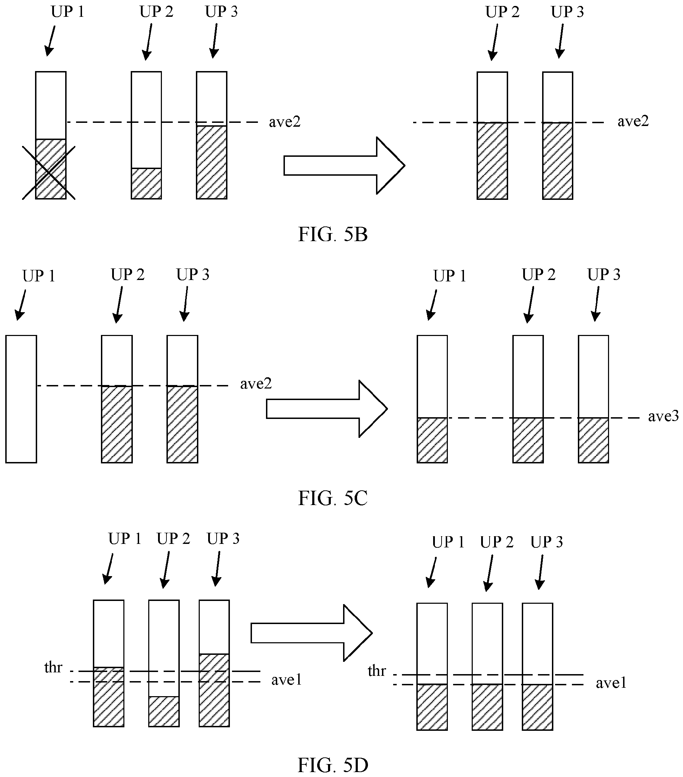

Refer to FIG. 5B. A part filled in stripes is used to schematically represent load of a UP device. If a UP 1 is a first UP device that goes offline due to a fault or goes pre-offline, when making a steering decision, the USF device needs to share, with a UP 2 and a UP 3, an online terminal that has successfully accessed the UP 1. In this case, the USF device may obtain a corrected average value (ave2) of the load based on load of the UP 1, the UP 2, and the UP 3, and decide to share online terminals of the UP 1 to the UP 2 and the UP 3, to ensure that related services of these users are still guaranteed after the UP 1 goes offline, and implement load balancing between the UP 2 and the UP 3.

Case (2): The device status of the first UP device changes. For example, the first UP device is a UP device that initially goes online or a UP device that resumes going online (including going online through fault recovery and/or going online based on a network topology change requirement).

Example ④: If the USF device determines, in a process of interacting with the CP device and/or the SDN controller, that a device status of any UP device managed by the CP device changes, where for example, the UP device is a UP device that initially goes online or a UP device that resumes going online, the USF device may determine that the UP device is a first UP device that meets the specified steering condition, and need to trigger steering, to share, with the first UP device, one or more online terminals that have successfully accessed another UP device (a UP device other than the first UP device in the plurality of UP devices, namely, a second UP device) in the plurality of UP devices, to implement load balancing between the plurality of UP devices.

In this case, the USF device may use the first UP device as the target UP device, determine at least one steered-out device in the second UP device based on the load of the plurality of UP devices, determine, in online terminals that have successfully accessed the at least one steered-out device, at least one target terminal to be steered, and decide that each target terminal needs to be steered to the first UP device, so that load balancing between the plurality of UP devices after steering can be implemented.

In an example, the USF device may determine, in the plurality of UP devices based on the load of the plurality of UP devices, a steered-out device whose load meets a preset second load condition, and determine, in the online terminals of the steered-out device, the at least one target terminal to be steered. For example, the second load condition may include: selecting a UP device whose load is not less than a second value, where the second value is an average value of the load of the plurality of UP devices. For calculation of the average value of the load, refer to the foregoing expression (2). Details are not described herein again.

For each steered-out device, at least one target terminal may be selected based on the second value, so that load between the UP devices is balanced after the selected at least one target terminal is steered from the steered-out device to the corresponding target UP device. When the at least one online target terminal is determined for each steered-out device, for example, the plurality of online target terminals on the same interface and/or in the same internet protocol IP address segment on the steered-out device may be steered to a same target UP device or different target UP devices, or the plurality of online target terminals on the same interface and/or in the same IP address segment on the steered-out device may be steered to a same target interface and/or a same target internet protocol IP address segment on the target UP device. This is not limited in this application.

It should be noted that, when the first UP device initially goes online and/or resumes going online, because there is no user session or traffic on the first UP device, load of the first UP device is empty. Therefore, in this embodiment of this application, the device status of the UP device may alternatively be converted to corresponding load, and correspondingly the specified steering condition may alternatively be related only to the load. This is not limited in this application. In addition, if the first UP device initially goes online or resumes going online, and the USF device decides to enable, in extremely short time, the terminal that requests to go online to access the first UP device, the first UP device has load but the load is smaller than load of another UP device, and the first UP device may alternatively be considered as being capable of triggering the steering condition. In this case, the steering condition may alternatively be considered as that the load is not greater than a specified first load threshold. The first load threshold may be 0, indicating that the load of the UP device is empty. Alternatively, the first load threshold may be a small non-zero value. This is not limited in this application.

In other words, in Case (2) above, if there is an idle device that initially goes online or resumes going online or a non-idle UP device whose load is smaller than that of another UP device in the plurality of UP devices, load unbalancing between the plurality of UP devices is caused. In this case, it may be considered that the specified steering condition is met, and the USF device recalculates load of each UP device and makes a steering decision, to implement load sharing by dynamically steering an online terminal, so that load balancing between the plurality of UP devices is implemented.

Refer to FIG. 5C. A part filled in stripes is used to schematically represent load of a UP device. If a UP 1 is a newly deployed idle UP device, when making a steering decision, the USF device needs to share, to the UP 1, a part of online terminals that have accessed a UP 2 and a UP 3. In this case, the USF device may obtain an average value (ave3) of the load based on load statuses of the UP 2 and the UP 3 and total load of the UP 1, the UP 2, and the UP 3, and make the steering decision to share the part of online terminals of the UP 2 and the UP 3 to the UP 1, to implement load balancing between the UP 1, the UP 2, and the UP 3.

Case (3): Load of an online first UP device meets a specified second load condition. For example, the load of the first UP device is not less than a specified load threshold, or the load of the first UP device falls within a specified interval. It may be understood that, in some cases, even if the load of the first UP device does not change, when load of another UP device in the plurality of UP devices under a same CP device changes, the load of the first UP device may also meet the specified second load condition, to trigger steering. For example, a specified load threshold (for example, average load of the plurality of UP devices under the same CP device) in the foregoing example may be used. In this way, load balancing between the UP 1, the UP 2, and the UP 3 is implemented.

Example ⑤: If the USF device perceives, in a process of interacting with the CP device and/or the SDN controller, that load of at least one first UP device in the plurality of UP devices is not less than a specified second load threshold, the USF device determines that the at least one first UP device meets a specified steering condition, and needs to trigger steering, to share a part of online terminals that have successfully accessed the first UP device to another UP device (namely, a second UP device), to implement load balancing between the plurality of UP devices through load sharing. The second load threshold may be preconfigured for the UP device. A difference from the first load threshold in Case (2) above is that, the second load threshold is used to indicate an upper limit of load that the UP device is allowed to bear, to avoid overload of the UP device.

In this case, the USF device may determine the at least one first UP device as a steered-out device, and determine, in online terminals of the steered-out device, the at least one target terminal to be steered. Alternatively, the USF device may determine a steered-out device whose device load meets a preset second load condition in the plurality of UP devices based on the load of the plurality of UP devices, and determine the at least one target terminal in online terminals of the steered-out device. Then, the USF device may make the steering decision based on the manner in Example ① or Example ②, and determine the target UP device for the target terminal in the plurality of UP devices.

Refer to FIG. 5D. A part filled in stripes is used to schematically represent load of a UP device. If determining that load of a UP 1 and a UP 3 exceeds a preset load threshold (threshold), the USF device determines that a part of online terminals of the UP 1 and the UP 3 need to be shared with another UP device, for example, a UP 2, to implement load balancing between the UP 1, the UP 2, and the UP 3. In this case, the USF device may determine, based on the load of the UP 1, the UP 2, and the UP 3, and the average value (ave1), of the load, obtained based on the total load of the UP 1, the UP 2, and the UP 3, and make a steering decision to share the part of online terminals of the UP 1 and the UP 3 to the UP 2, to implement load balancing between the UP 1, the UP 2, and the UP 3.

It should be noted that in Case (1), Case (2), and Case (3) above, the online target terminal may include a plurality of terminals; and when making the steering decision, the USF device may make the steering decision for the plurality of terminals based on granularities such as a UP device, an interface, or an IP address segment. For example, at least one or more pieces of the following information of any at least two of the plurality of terminals to be steered are the same: a device identifier of the source UP device, interface information of a source interface of the source UP device, and a source internet protocol IP address segment. A same target UP device and/or a same target interface and/or a same target internet protocol IP address segment may alternatively be allocated to the any at least two of the plurality of terminals that need to be steered to the target UP device. In other words, when making the steering decision, the USF device may determine to steer at least two online target terminals that access a same UP device to the same target UP device, or may determine to steer at least two terminals that access a same interface to the same target interface, or may determine to enable at least two terminals that access a same IP address segment to access the same target IP address segment. Therefore, the USF device may simultaneously make the steering decisions for the at least two online terminals based on the granularities such as the UP device, the interface, and the IP address segment, so that a calculation speed can be accelerated, and steering decision time can be reduced.

It should be noted that, in the foregoing different scenarios and different cases, the process in which the USF device interacts with the CP device and/or the SDN controller may include a process in which the CP device and/or the SDN controller periodically report the load and/or the device status information of the UP device to the USF device based on the predetermined time interval, or may include a process in which the CP device and/or the SDN controller report the load and/or the device status information to the USF device when determining that the UP device meets the foregoing related steering condition; and the process may further include a process in which any UP device in the plurality of UP devices sends the load and/or the device status information of the UP device to the CP device, so that the CP device sends, to the USF device, information required for making the steering decision. This is not limited in this application.

The steering decision made by the USF device in different cases has been schematically described above with reference to FIG. 5A to FIG. 5D.

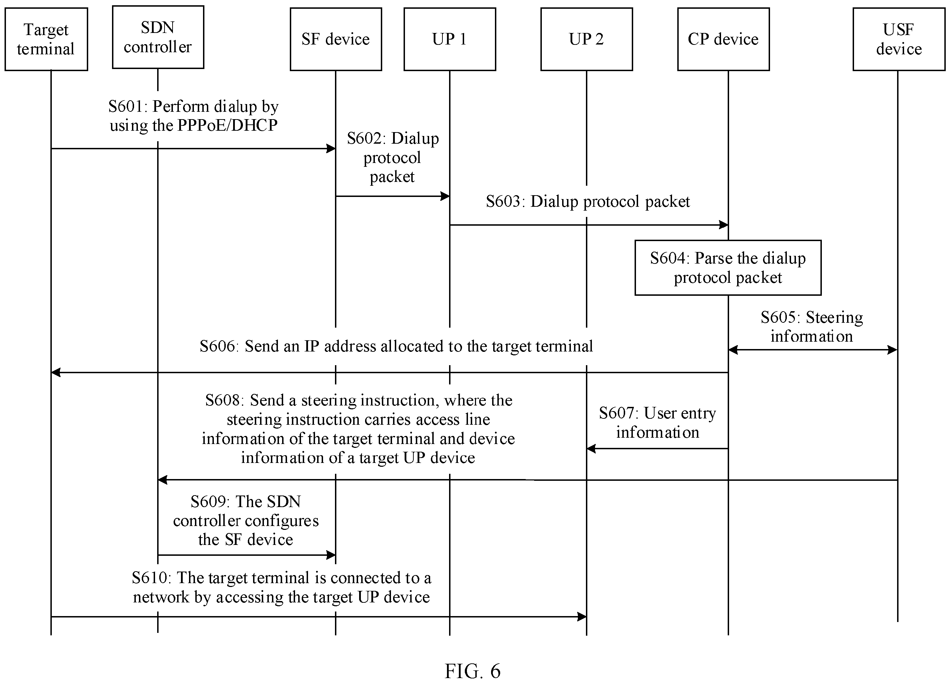

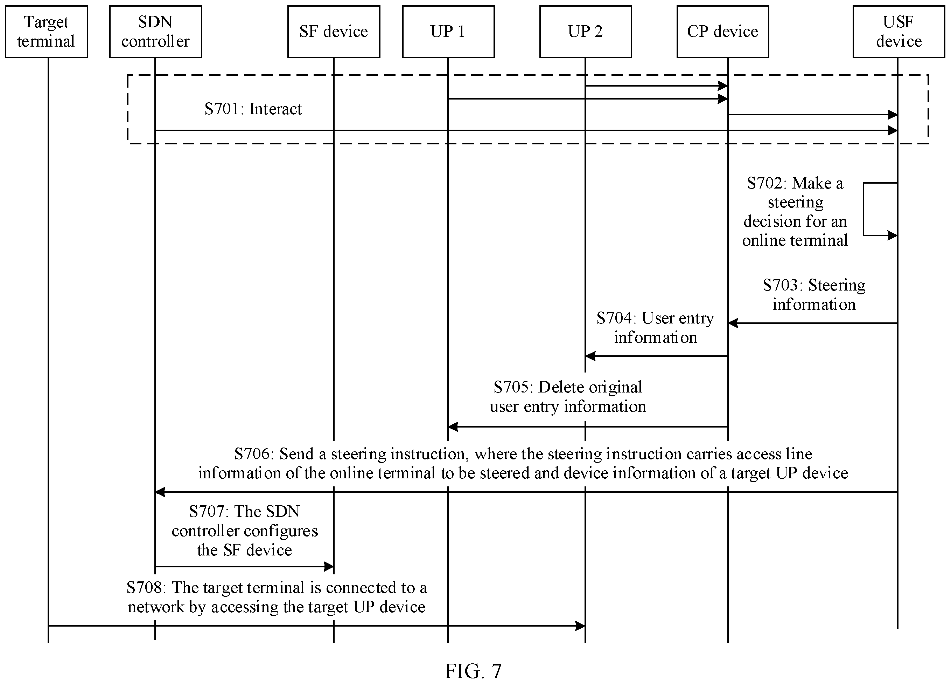

Refer to the method flowcharts shown in FIG. 6 and FIG. 7. The following describes related details of the method for accessing a gateway implemented by each device in the system in FIG. 1 in Scenario 1 or Scenario 2 above.

FIG. 6 is a schematic flowchart of a method for accessing a gateway according to an embodiment of this application. In the method procedure, a target terminal accesses a target UP device in a scenario in which the target terminal requests to go online. Refer to FIG. 6. The method for accessing a gateway includes the following steps.

S601: The target terminal performs dialup by using the PPPoE/DHCP, and sends a dialup protocol packet.

S602: An SF device receives the dialup protocol packet of the target terminal, and sends the dialup protocol packet to a default UP device (a UP 1).

S603: The UP 1 sends the dialup protocol packet to a CP device.

S604: The CP device parses the dialup protocol packet, to obtain access line information, dialup authentication information (for example, including a user name, a password, and the like), and the like of the target terminal from the dialup protocol packet, and interacts with an AAA server to obtain authentication and authorization. The CP device may send an authentication request including the dialup authentication information of the target terminal to the AAA server, and the AAA server performs authentication and authorization on the target terminal based on the dialup authentication information. After the authentication succeeds, the AAA server sends an authentication success message to the CP device.

S605: The CP device interacts with a USF device to obtain, from the USF device, a steering policy corresponding to the target terminal. The CP device may send a steering request including user information of the target terminal to the USF device, and the USF device may make a steering decision for the target terminal based on the user information of the target terminal and load of a plurality of UP devices. Then, the USF device sends steering information corresponding to the target terminal to the CP device, where the steering information is used to indicate the target UP device corresponding to the terminal and device information of the target UP device. For details about how the USF device makes the steering decision for the target terminal, refer to the foregoing related descriptions. Details are not described herein again.

It should be noted that S601 to S605 are merely examples for description, and a process in which any UP device interacts with the CP device to report load and/or device status information of the UP device to the CP device is not shown. It may be understood that, in a system running process, the any UP device may interact with the CP device, to send the load and/or the device status information of the UP device to the CP device based on a predetermined time period or when a specified condition is met, and the USF device may determine the target UP device in the plurality of UP devices based on the user information of the target terminal and the load and/or the device status information of the any UP device. For example, the specified condition may include: A status of the any UP device changes and/or the load of the any UP device changes. That the status of the any UP device changes includes either or both of the following: the any UP device goes pre-offline or goes offline due to a fault; or the UP device initially goes online or resumes going online; and that the load of the any UP device changes includes: the load of the any UP device meets a specified load condition. For details, refer to the foregoing related descriptions. Details are not described herein again.

S606: The CP device sends, to the target terminal, an internet protocol IP address allocated to the target terminal.

The CP device may allocate the internet protocol IP address to the target terminal by using a network control protocol corresponding to a manner of dialup, and send the internet protocol IP address to the target terminal.

S607: The CP device generates user entry information, and sends the user entry information to the target UP device.

After determining the target UP device, the CP device may generate routing information of the target terminal. Then, authorization information, such as the IP address allocated to the target terminal, a MAC address of the terminal, the routing information of the terminal, and a QoS and an ACL of the terminal, is used as the user entry information. The CP device may deliver the generated user entry information to the target UP device through a control interface SCi between the CP device and the target UP interface.

The target UP device may generate a user forwarding entry based on the user entry information, generate a user route at the same time, and advertise the user route to another related device. Therefore, when subsequently receiving a data packet of the terminal, the target UP device may forward the data packet based on the user forwarding entry and the user route.

S608: The USF device sends a steering instruction to an SDN network controller, where the steering instruction carries access line information of the target terminal and the device information of the target UP device, to instruct the SDN controller to control, through the steering function SF device, the terminal to access the target UP device.

The access line information of the target terminal may include the media access control MAC address of the target terminal, a device identifier of an access network AN device, port information of a port that is in the AN device and that is connected to the target terminal, and virtual local area network VLAN information/QINQ corresponding to the target terminal. The device information of the target UP device may include a device identifier of the target UP device, interface information of a target interface of the target UP device, and a network identifier of a virtual extensible local area network VXLAN/a virtual leased line (virtual leased line, VLL)/an ethernet virtual private network (ethernet virtual private network, EVPN) corresponding to the target interface.

S609: The SDN controller may configure the SF device based on the access line information of the target terminal and the device information of the target UP device, so that the SF device maps the port, the VLAN, the QINQ, and the like corresponding to the target terminal to a layer-2 tunnel (VXLAN/VLL/EVPN) connected to the corresponding target UP device.

After receiving the access line information and the device information of the target UP device that are sent by the USF device, the SDN controller may determine, based on the access line information, the VLAN information corresponding to the target terminal. Then, the SDN controller may include the port information of the port corresponding to the target terminal, the VLAN, the QINQ, and the network identifier of the VXI,AN/VLL/EVPN of the target UP device in the steering instruction, and deliver the steering instruction to the SF device. After receiving the steering instruction, the SF device may map the port information, the VLAN, and the QINQ of the target terminal that are carried in the steering instruction to the VXLAN corresponding to the target UP device, so that the target terminal accesses the target UP device.

It should be noted that when the target terminal performs dialup through the SF device, if the SF device sends the dialup protocol packet to the CP device through a default UP device, the port that is in the SF device and that is connected to the terminal and the VLAN corresponding to the terminal are mapped to a VXLAN corresponding to the default UP device. In other words, the SF device stores a mapping relationship between the port information of the port that is in the SF device and that is connected to the terminal, the VLAN information corresponding to the terminal, and a network identifier of the VXLAN corresponding to the default UP device. In this case, after receiving the device information of the target UP device, to control the target terminal to access the target UP device, the SDN controller needs to map an access port and the VLAN of the target terminal to the VXLAN corresponding to the target UP device. Based on this, the SDN controller may deliver, to the SF device, the VXLAN corresponding to the target UP device. After receiving the steering instruction, the SF device may search, based on the port information, the VLAN, and the QINQ of the target terminal that are carried in the steering instruction, the stored mapping relationship for a record including the port information and the VLAN information, and then update the network identifier of the VXLAN corresponding to the port information and the VLAN information in the found record to the network identifier of the VXLAN corresponding to the target UP device.

S610: The target terminal is connected to a network by accessing the target UP device.

FIG. 7 is a schematic flowchart of a method for accessing a gateway according to another embodiment of this application. In the method procedure, when a target terminal is online and a steering condition is triggered, dynamic user steering is performed between a plurality of UP devices, to implement load balancing between the plurality of UP devices. Refer to FIG. 7. The method for accessing a gateway includes the following steps.

S701: A USF device separately interacts with a CP device and/or an SDN controller, to determine whether at least one first UP device in the plurality of UP devices meets a specified steering condition.

In this embodiment of this application, the USF device may obtain, in a process of interacting with another device in a system, related information for making a steering decision. The interaction process may include a process in which the USF device directly interacts with another device, or may include a process in which the USF device interacts with another device through a relay device. This is not limited in this application.

In a possible design, the USF device may obtain first information in a process of interacting with the CP device, where the first information is used by the USF device to make the steering decision to determine a target UP device in the plurality of UP devices. The first information may include any one or more of the following: user information of the target terminal, load of the plurality of UP devices, device status information of the plurality of UP devices, and steering indication information, where the steering indication information is used to indicate that the at least one first UP device in the plurality of UP devices meets the steering condition, and the first UP device is any UP device in the plurality of UP devices.

In an example, any UP device managed by the CP device may send load and/or device status information of the UP device to the CP device. After receiving the load and/or the device status information of the UP device from the any UP device in the plurality of UP devices, the CP device may send the load and/or the device status information of the any UP device to the USF device, so that the USF device determines the target UP device in the plurality of UP devices based on the load and/or the device status information obtained from the CP device, and indicates to enable the target terminal to access the target UP device.

In an example, the CP device may send the user information of the target terminal to the USF device, where the user information is used by the USF device to determine the target UP device in the plurality of UP devices based on the user information and the load and/or the device status information.

In an example, the CP device may send the steering indication information to the USF device, where the steering indication information is used to indicate that at least one UP device in the plurality of UP devices meets the steering condition, and the steering indication information is used by the USF device to determine, based on the steering indication information, whether to steer at least one online target terminal on the at least one UP device that meets the steering condition to the target UP device; and the steering condition includes: the load meets a specified load condition, and/or a device status changes.

It may be understood that the first information received by the USF device in the process of interacting with the CP device may not include the steering indication information, and the USF device determines, based on content in the first information, whether the specified steering condition is met, to trigger a steering operation. It may be understood that, when the USF is configured on the CP device, these interaction processes are interaction processes inside the CP device. Each UP device may send load and/or device status information of the UP device to the CP device based on a predetermined time period, or may send load and/or device status information of the UP device to the CP device when the foregoing steering condition is met. This is not limited in this application.

In a possible design, the SDN controller may monitor each UP device, and send the steering indication information to the USF device when determining that a device status of each UP device changes (for example, going offline due to a fault), where the steering indication information may be used to indicate that the at least one first UP device in the plurality of UP devices meets the specified steering condition. Same as above, the SDN controller may alternatively directly report the load and/or the device status information of the UP device to the USF device, and the USF device determines, based on the reported content, whether the specified steering condition is met, to trigger the steering operation. It may be understood that, when the USF is configured on the SDN controller, these interactions belong to interactions inside the SDN controller.

S702: The USF device determines that the at least one first UP device in the plurality of UP devices meets the specified steering condition, and makes the steering decision based on the load of the plurality of UP devices, to guide terminal steering between the plurality of UP devices. For detailed details of the steering decision, refer to the foregoing related descriptions. Details are not described herein again.

S703: The USF device delivers steering information to the CP device, where the steering information is used to indicate the target UP device corresponding to the target terminal and device information of the target UP device.

S704: The CP device generates user entry information based on the received steering information, and sends the user entry information to the target UP device (for example, a UP 2), to indicate the UP 2 to forward, based on the user entry information, a data packet sent after a user is successfully steered.

S705: The CP device sends a deletion instruction to a source UP device (for example, a UP 1) of the target terminal, to instruct the UP 1 to delete original user entry information.

S706: The USF device sends a steering instruction to the SDN controller, where the steering instruction includes access line information of the target terminal to be steered and the device information of the target UP device, to instruct the SDN controller to perform the following step: controlling, through a steering function SF device based on the access line information of the target terminal and the device information of the target UP device that are received from the USF device, the target terminal to access the target UP device. The access line information may include a media access control MAC address of the terminal, a device identifier of an access network AN device, port information of a port that is in the AN device and that is connected to the SF device, and virtual local area network VLAN information (or QINQ) corresponding to the terminal. The device information of the target UP device may include a device identifier of the target UP device, interface information of a target interface of the target UP device, and a network identifier of a virtual extensible local area network VXLAN (or a virtual leased line (virtual leased line, VLL), an ethernet virtual private network (ethernet virtual private network, EVPN), or the like) corresponding to the target interface.

S707: The SDN controller may configure the SF device based on the access line information of the target terminal and the device information of the target UP device, so that the SF device maps the port, the VLAN, the QINQ, and the like corresponding to the target terminal to a layer-2 tunnel (VXLAN/VLL/EVPN) connected to the corresponding target UP device. For details, refer to related descriptions of S609. Details are not described herein again.

S708: The target terminal is connected to a network by accessing the target UP device.

Therefore, interactions between devices in the system shown in FIG. 1 are schematically described by using the method flowcharts in FIG. 6 and FIG. 7 in the scenario in which the terminal requests to go online and the scenario of the online terminal is steered. It should be noted that FIG. 6 and FIG. 7 are merely described by using an example in which the USF device is a device independent of the SDN controller and the CP device, and do not impose any limitation on a product form of the USF device. If the USF device is configured on the SDN controller or configured on the CP device, only some arrow directions in the flowcharts in FIG. 6 and FIG. 7 change, and functions of the devices do not change.

According to the foregoing descriptions in FIG. 1 to FIG. 7, in embodiments of this application, in the scenario in which the terminal requests to go online and the scenario of the online terminal is steered, the target UP device that the target terminal needs to access can be accurately decided in a plurality of calculation manners based on the load of the plurality of UP devices, to implement load sharing between devices in the network, and implement flexible scheduling of user sessions between the plurality of UP devices. This facilitates network load balancing.

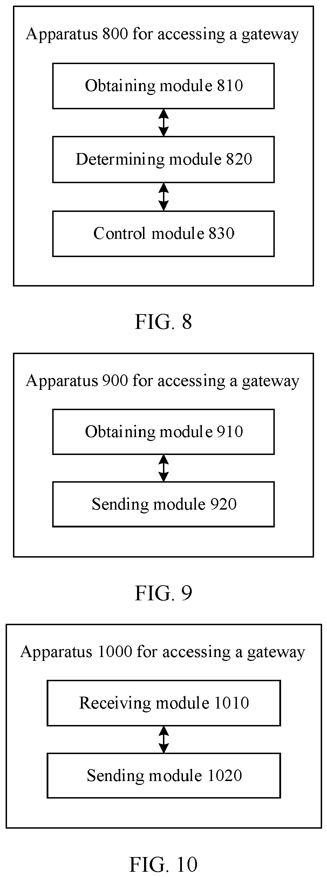

Refer to FIG. 8. An embodiment of this application provides an apparatus 800 for accessing a gateway. The apparatus 800 may be used in a network system including a virtual broadband network gateway vBNG, where the vBNG includes a control plane CP device and a plurality of UP devices managed by the CP device, and the network system further includes a user plane steering function USF device. The apparatus 800 is the USF device, and may be the USF device in FIG. 1 and FIG. 2, and FIG. 6 and FIG. 7. The apparatus 800 may include an obtaining module 810, a determining module 820, and a control module 830.

In a specific implementation, the obtaining module 810 is configured to obtain user information of a target terminal. For a specific implementation, refer to the detailed descriptions of S310 in the embodiment shown in FIG. 3, or S316 in the embodiment shown in FIG. 4, or S605 in the embodiment shown in FIG. 6, or S701 in the embodiment shown in FIG. 7. Details are not described herein again.

The determining module 820 is configured to determine a target UP device in the plurality of UP devices based on the user information and load of the plurality of UP devices. For a specific implementation, refer to the detailed descriptions of S320 in the embodiment shown in FIG. 3, or S605 in the embodiment shown in FIG. 6, or S702 in the embodiment shown in FIG. 7. Details are not described herein again.

The control module 830 is configured to indicate to enable the target terminal to access the target UP device. For a specific implementation, refer to the detailed descriptions of S320 in the embodiment shown in FIG. 3, or S608 to S610 in the embodiment shown in FIG. 6, or S706 to S708 in the embodiment shown in FIG. 7. Details are not described herein again.

In a specific implementation, the user information includes a service level agreement SLA level of the target terminal, and the determining module is configured to: determine, in the plurality of UP devices based on a correspondence between the SLA level and the UP device, at least two candidate UP devices corresponding to the SLA level; and select, from the at least two candidate UP devices based on load of the at least two candidate UP devices, the target UP device whose load meets a specified first load condition. For a specific implementation, refer to the detailed descriptions of S320 in the embodiment shown in FIG. 3. Details are not described herein again.

In a specific implementation, the first load condition includes: selecting a UP device whose load is smallest; and/or selecting a UP device whose load is not greater than a first value, where the first value includes an average value of the load of the at least two candidate UP devices. For details, refer to the foregoing detailed descriptions with reference to Scenario 1 and Scenario 2. Details are not described herein again.

In a specific implementation, load of any UP device includes user session load and/or traffic load. In a specific implementation, the user session load includes at least one of the following: a quantity of user sessions and session usage; and the traffic load includes bandwidth usage.

In a specific implementation, the obtaining module is configured to: obtain the user information of the target terminal from the CP device when the target terminal requests the CP device to go online, where the user information is obtained by the CP device based on a dialup protocol packet sent by the target terminal. For a specific implementation, refer to the detailed descriptions in the scenario in which the target terminal requests to go online and the detailed descriptions of S311 to S316 in the embodiment shown in FIG. 4. Details are not described herein again.

In a specific implementation, if the target terminal is an online terminal that has accessed a gateway through a first UP device, the first UP device is at least one UP device in the plurality of UP devices; and the determining module is configured to: when determining that the at least one first UP device meets a steering condition, determine the target UP device in the plurality of UP devices based on the user information and the load of the plurality of UP devices, where the steering condition includes: the load meets a specified second load condition, and/or a device status changes; and the control module is configured to indicate to steer at least one online target terminal on the first UP device that meets the steering condition to the target UP device. For a specific implementation, refer to the foregoing detailed descriptions in Scenario 2. Details are not described herein again.

In a specific implementation, that the device status of the first UP device changes includes any one or more of the following: the first UP device goes pre-offline or goes offline due to a fault; or the first UP device initially goes online or resumes going online. For a specific implementation, refer to the related descriptions of Case (1), Case (2), and Case (3) above. Details are not described herein again.

In a specific implementation, when the first UP device that meets the steering condition accesses a plurality of online target terminals, the control module is configured to: indicate to steer a plurality of online target terminals that are on a same interface and/or in a same internet protocol IP address segment on the first UP device that meets the steering condition to a same target UP device or different target UP devices. For a specific implementation, refer to the detailed descriptions of S330 in the embodiment shown in FIG. 3, or S605 to S610 in the embodiment shown in FIG. 6, or S703 to S708 in the embodiment shown in FIG. 7. Details are not described herein again.

In a specific implementation, that the control module indicates to steer a plurality of online target terminals that are on a same interface and/or in a same IP address segment on the first UP device that meets the steering condition to a same target UP device includes: The USF device indicates to steer the plurality of online target terminals that are on the same interface and/or in the same IP address segment on the first UP device that meets the steering condition to a same target interface and/or a same target internet protocol IP address segment on the target UP device. For a specific implementation, refer to the detailed descriptions of S330 in the embodiment shown in FIG. 3, or S605 to S610 in the embodiment shown in FIG. 6, or S703 to S708 in the embodiment shown in FIG. 7. Details are not described herein again.

In a specific implementation, the system further includes a software-defined networking SDN controller, where the apparatus is configured in the CP device, or the apparatus is configured in the SDN controller, or the apparatus is a device independent of the CP device and the SDN controller. For a specific implementation, refer to the network system shown in FIG. 1. Details are not described herein again.

In a specific implementation, if the apparatus is the device independent of the CP device and the SDN controller, the obtaining module is configured to receive the user information from the CP device; the obtaining module is further configured to receive, from the CP device, any one or more of the following: the load of the plurality of UP devices, device status information of the plurality of UP devices, and steering indication information, where the steering indication information is used to indicate that the at least one first UP device in the plurality of UP devices meets the steering condition; and the control module is configured to indicate the SDN controller to enable the target terminal to the target UP device. For a specific implementation, refer to the detailed descriptions of S330 in the embodiment shown in FIG. 3, or S605 to S610 in the embodiment shown in FIG. 6, or S703 to S708 in the embodiment shown in FIG. 7. Details are not described herein again.

In a specific implementation, that the control module indicates the SDN controller to enable the target terminal to access the target UP device includes: sending a steering instruction to the SDN controller, where the steering instruction carries access line information of the target terminal and device information of the target UP device, and the steering instruction is used to instruct the SDN controller to control, through a steering function SF device based on the access line information of the target terminal and the device information of the target UP device, the target terminal to access the target UP device; and the control module is further configured to send steering information to the CP device, where the steering information is used to indicate the target UP device corresponding to the target terminal and the device information of the target UP device. For a specific implementation, refer to the detailed descriptions of S330 in the embodiment shown in FIG. 3, or S605 to S610 in the embodiment shown in FIG. 6, or S703 to S708 in the embodiment shown in FIG. 7. Details are not described herein again.

In a specific implementation, the access line information is carried in the dialup protocol packet sent by the target terminal through the SF device, and the access line information includes a media access control MAC address of the target terminal, a device identifier of an access network AN device, port information of a port that is in the AN device and that is connected to the SF device, and virtual local area network VLAN information corresponding to the target terminal; and the device information of the target UP device includes a device identifier of the target UP device, interface information of a target interface of the target UP device, and a network identifier of a virtual extensible local area network VXLAN corresponding to the target interface.

In a specific implementation, the any UP device in the plurality of UP devices is a physical UP device or a virtual UP device.

Refer to FIG. 9. An embodiment of this application provides an apparatus 900 for accessing a gateway. The apparatus 900 may be used in a network system including a virtual broadband network gateway vBNG, where the vBNG includes a control plane CP device and a plurality of UP devices managed by the CP device, and the network system further includes a user plane steering function USF device. The apparatus 900 may be configured on any UP device in the plurality of UP devices, or may be a UP device itself, and may implement functions of the UP device in FIG. 6 and FIG. 7. The apparatus 900 may include an obtaining module 910 and a sending module 920.

In a specific implementation, the obtaining module 910 is configured to obtain load and/or device status information of the obtaining module 910. For a specific implementation, refer to the detailed descriptions of S701 in the embodiment shown in FIG. 7. Details are not described herein again.

The sending module 920 is configured to send the load and/or the device status information to the CP device, where the load and/or the device status information are/is used by the USF device to determine a target UP device in the plurality of UP devices based on the load and/or the device status information obtained from the CP device, and indicate to enable a target terminal to access the target UP device. For a specific implementation, refer to the detailed descriptions of step S701 in the embodiment shown in FIG. 7. Details are not described herein again.

In a specific implementation, the sending module 920 may send load and/or device status information of the sending module 920 to the CP device based on a predetermined time period; or the sending module 920 may send load and/or device status information of the sending module 920 to the CP device when the UP device meets a specified condition. The specified condition may include: a status of the apparatus changes and/or the load of the apparatus changes. That the status of the apparatus changes includes either or both of the following: the apparatus goes pre-offline or goes offline due to a fault; or the apparatus initially goes online or resumes going online; and that the load of the apparatus changes includes: the load of the apparatus meets a specified load condition. For a specific implementation, refer to the detailed descriptions of S701 in the embodiment shown in FIG. 7. Details are not described herein again.

Refer to FIG. 10. An embodiment of this application provides an apparatus 1000 for accessing a gateway. The apparatus 1000 may be used in a network system including a virtual broadband network gateway vBNG, where the vBNG includes a control plane CP device and a plurality of UP devices managed by the CP device, and the network system further includes a user plane steering function USF device. The apparatus 1000 may be configured on the CP device, or may be the CP device itself, and may implement functions of the CP device in FIG. 4, and FIG. 6 and FIG. 7. The apparatus 1000 may include a receiving module 1010 and a sending module 1020.

In a specific implementation, the receiving module 1010 is configured to receive load and/or device status information of any UP device from the any UP device in the plurality of UP devices. For a specific implementation, refer to FIG. 6, or refer to the detailed descriptions in FIG. 7. Details are not described herein again.

The sending module 1020 is configured to send the load and/or the device status information of the any UP device to the USF device, where the load and/or the device status information are/is used by the USF device to determine a target UP device in the plurality of UP devices based on the load and/or the device status information, and indicate to enable a target terminal to access the target UP device. For a specific implementation, refer to the detailed descriptions of the CP device in FIG. 6 and FIG. 7. Details are not described herein again.

In a specific implementation, the sending module is further configured to send user information of the target terminal to the USF device, where the user information is used by the USF device to determine the target UP device in the plurality of UP devices based on the user information and the load and/or the device status information. For a specific implementation, refer to the detailed descriptions of the CP device in FIG. 6 and FIG. 7. Details are not described herein again.

In a specific implementation, the enabling a target terminal to access the target UP device including steering an online target terminal to the target UP device, and the sending module is further configured to: send steering indication information to the USF device, where the steering indication information is used to indicate that at least one UP device in the plurality of UP devices meets a steering condition, and the steering indication information is used by the USF device to determine, based on the steering indication information, whether to steer at least one online target terminal on the at least one UP device that meets the steering condition to the target UP device; and the steering condition includes: the load meets a specified load condition, and/or a device status changes. For a specific implementation, refer to the detailed descriptions of the CP device in FIG. 6 and FIG. 7. Details are not described herein again.

In a specific implementation, that the device status of the at least one UP device changes includes: The at least one UP device goes pre-offline or goes offline due to a fault, or the at least one UP device initially goes online or resumes going online.

Persons skilled in the art should understand that embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing module to generate a machine, so that the instructions executed by a computer or a processor of another programmable data processing module generate an apparatus for implementing a specific function in one or more processes in the flowcharts and/or in one or more blocks in the block diagrams.

These computer program instructions may alternatively be stored in a computer-readable memory that can instruct a computer or another programmable data processing module to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing module, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

It is clearly that, persons skilled in the art can make various modifications and variations to embodiments of the present invention without departing from the spirit and scope of embodiments of the present invention. In this way, the present invention is intended to cover these modifications and variations provided that the modifications and variations of embodiments of the present invention fall within the scope of protection defined by the following claims and their equivalent technologies in the present invention.

**Claims**

1. A method for accessing a gateway, applied to a network system comprising a virtual broadband network gateway vBNG, wherein the vBNG comprises a control plane CP device and a plurality of UP devices managed by the CP device, the network system further comprises a user plane steering function USF device, and the method comprises:

    obtaining, by the USF device, user information of a target terminal;
    determining, by the USF device, a target UP device in the plurality of UP devices based on the user information and load of the plurality of UP devices; and
    indicating, by the USF device, the target terminal to access the target UP device.

2. The method according to claim 1, wherein the user information comprises a service level agreement SLA level of the target terminal, and the determining, by the USF device, a target UP device in the plurality of UP devices based on the user information and load information of the plurality of UP devices comprises:

    determining, by the USF device in the plurality of UP devices based on a correspondence between the SLA level and the UP device, at least two candidate UP devices corresponding to the SLA level; and
    selecting, by the USF device from the at least two candidate UP devices based on load of the at least two candidate UP devices, the target UP device whose load meets a specified first load condition.

3. The method according to claim 2, wherein the first load condition comprises:

    selecting a UP device whose load is smallest; and/or
    selecting a UP device whose load is not greater than a first value, wherein the first value comprises an average value of the load of the at least two candidate UP devices.

4. The method according to any one of claims 1 to 3, wherein load of any UP device in the plurality of UP devices comprises user session load and/or traffic load.

5. The method according to claim 4, wherein

    the user session load comprises at least one of the following: a quantity of user sessions and session usage; and
    the traffic load comprises bandwidth usage.

6. The method according to any one of claims 1 to 5, wherein the obtaining, by the USF device, user information of a target terminal comprises:
    obtaining, by the USF device, the user information of the target terminal from the CP device when the target terminal requests the CP device to go online, wherein the user information is obtained by the CP device based on a dialup protocol packet sent by the target terminal.

7. The method according to any one of claims 1 to 5, wherein if the target terminal is an online target terminal that has accessed a gateway through a first UP device, the first UP device is at least one UP device in the plurality of UP devices;
the determining, by the USF device, a target UP device in the plurality of UP devices based on the user information and load of the plurality of UP devices comprises:

when determining that the at least one first UP device meets a steering condition, determining, by the USF device, the target UP device in the plurality of UP devices based on the user information and the load of the plurality of UP devices, wherein the steering condition comprises: the load meets a specified second load condition, and/or a device status changes; and
the indicating, by the USF device, the target terminal to access the target UP device comprises:
indicating, by the USF device, to steer at least one online target terminal on the first UP device that meets the steering condition to the target UP device.

8. The method according to claim 7, wherein that the device status of the first UP device changes comprises either or both of the following:

the first UP device goes pre-offline or goes offline due to a fault; or
the first UP device initially goes online or resumes going online.

9. The method according to claim 7 or 8, wherein when the first UP device that meets the steering condition accesses a plurality of online target terminals, the indicating, by the USF device, to steer at least one online target terminal on the first UP device that meets the steering condition to the target UP device comprises:
indicating, by the USF device, to steer a plurality of online target terminals that are on a same interface and/or in a same internet protocol IP address segment on the first UP device that meets the steering condition to a same target UP device or different target UP devices.

10. The method according to claim 9, wherein the indicating, by the USF device, to steer a plurality of online target terminals that are on a same interface and/or in a same IP address segment on the first UP device that meets the steering condition to a same target UP device comprises:
indicating, by the USF device, to steer the plurality of online target terminals that are on the same interface and/or in the same IP address segment on the first UP device that meets the steering condition to a same target interface and/or a same target internet protocol IP address segment on the target UP device.

11. The method according to any one of claims 1 to 10, wherein the network system further comprises a software-defined networking SDN controller, wherein

the USF device is configured in the CP device;
the USF device is configured in the SDN controller; or
the USF device is a device independent of the CP device and the SDN controller.

12. The method according to claim 11, wherein if the USF device is the device independent of the CP device and the SDN controller,

the obtaining, by the USF device, user information of a target terminal comprises: receiving, by the USF device, the user information from the CP device;
the method further comprises:

receiving, by the USF device from the CP device, any one or more of the following: the load of the plurality of UP devices, device status information of the plurality of UP devices, and steering indication information, wherein the steering indication information is used to indicate that the at least one first UP device in the plurality of UP devices meets the steering condition; and
the indicating, by the USF device, the target terminal to access the target UP device comprises:
indicating, by the USF device, the SDN controller to enable the target terminal to access the target UP device.

13. The method according to claim 12, wherein the indicating, by the USF device, the SDN controller to enable the target terminal to access the target UP device comprises:

sending, by the USF device, a steering instruction to the SDN controller, wherein the steering instruction carries access line information of the target terminal and device information of the target UP device, and the steering instruction is used to instruct the SDN controller to control, through a steering function SF device based on the access line information of the target terminal and the device information of the target UP device, the target terminal to access the target UP device; and

the method further comprises:

sending, by the USF device, steering information to the CP device, wherein the steering information is used to indicate the target UP device corresponding to the target terminal and the device information of the target UP device.

14. The method according to claim 13, wherein the access line information is carried in the dialup protocol packet sent by the target terminal through the SF device, and the access line information comprises a media access control MAC address of the target terminal, a device identifier of an access network AN device, port information of a port that is in the AN device and that is connected to the SF device, and virtual local area network VLAN information corresponding to the target terminal; and

the device information of the target UP device comprises a device identifier of the target UP device, interface information of a target interface of the target UP device, and a network identifier of a virtual extensible local area network VXLAN corresponding to the target interface.

15. The method according to any one of claims 1 to 14, wherein the any UP device in the plurality of UP devices is a physical UP device or a virtual UP device.

16. A method for accessing a gateway, applied to a network system comprising a virtual broadband network gateway vBNG, wherein the vBNG comprises a control plane CP device and a plurality of UP devices managed by the CP device, the network system further comprises a user plane steering function USF device, and the method comprises:
sending, by any UP device in the plurality of UP devices, load and/or device status information of the UP device to the CP device, wherein the load and/or the device status information are/is used by the USF device to determine a target UP device in the plurality of UP devices based on the load and/or the device status information obtained from the CP device, and indicate a target terminal to access the target UP device.

17. The method according to claim 16, wherein

sending, by the any UP device, the load and/or the device status information of the UP device to the CP device based on a predetermined time period; and/or
sending, by the any UP device, the load and/or the device status information of the UP device to the CP device when meeting a specified condition.

18. The method according to claim 17, wherein the specified condition comprises: a status of the any UP device changes and/or the load of the any UP device changes.

19. The method according to claim 18, wherein that the status of the any UP device changes comprises either or both of the following:

the any UP device goes pre-offline or goes offline due to a fault; or
the UP device initially goes online or resumes going online; and
that the load of the any UP device changes comprises: the load of the any UP device meets a specified load condition.

20. The method according to any one of claims 16 to 19, wherein the any UP device in the plurality of UP devices is a physical UP device and/or a virtual UP device.

21. A method for accessing a gateway, applied to a network system comprising a virtual broadband network gateway vBNG, wherein the vBNG comprises a control plane CP device and a plurality of UP devices managed by the CP device, the network system further comprises a user plane steering function USF device, and the method comprises:

receiving, by the CP device, load and/or device status information of any UP device from the any UP device in the plurality of UP devices; and

sending, by the CP device, the load and/or the device status information of the any UP device to the USF device, wherein the load and/or the device status information are/is used by the USF device to determine a target UP device in the plurality of UP devices based on the load and/or the device status information, and indicate a target terminal to access the target UP device.

22. The method according to claim 21, wherein the method further comprises:
sending, by the CP device, user information of the target terminal to the USF device, wherein the user information is used by the USF device to determine the target UP device in the plurality of UP devices based on the user information and the load and/or the device status information.

23. The method according to claim 22, wherein the enabling a target terminal to access the target UP device comprises steering an online target terminal to the target UP device, and the method further comprises:
sending, by the CP device, steering indication information to the USF device, wherein the steering indication information is used to indicate that at least one UP device in the plurality of UP devices meets a steering condition, and the steering indication information is used by the USF device to determine, based on the steering indication information, whether to steer at least one online target terminal on the at least one UP device that meets the steering condition to the target UP device; and the steering condition comprises: the load meets a specified load condition, and/or a device status changes.

24. The method according to claim 23, wherein that the device status of the at least one UP device changes comprises: the at least one UP device goes pre-offline or goes offline due to a fault, or the at least one UP device initially goes online or resumes going online.

25. An apparatus for accessing a gateway, used in a network system comprising a virtual broadband network gateway vBNG, wherein the vBNG comprises a control plane CP device and a plurality of UP devices managed by the CP device, and the apparatus comprises:

an obtaining module, configured to obtain user information of a target terminal;
a determining module, configured to determine a target UP device in the plurality of UP devices based on the user information and load of the plurality of UP devices; and
a control module, configured to indicate the target terminal to access the target UP device.

26. The apparatus according to claim 25, wherein the user information comprises a service level agreement SLA level of the target terminal, and the determining module is configured to:

determine, in the plurality of UP devices based on a correspondence between the SLA level and the UP device, at least two candidate UP devices corresponding to the SLA level; and
select, from the at least two candidate UP devices based on load of the at least two candidate UP devices, the target UP device whose load meets a specified first load condition.

27. The apparatus according to claim 26, wherein the first load condition comprises:

selecting a UP device whose load is smallest; and/or
selecting a UP device whose load is not greater than a first value, wherein the first value comprises an average value of the load of the at least two candidate UP devices.

28. The apparatus according to any one of claims 25 to 27, wherein load of any UP device in the plurality of UP devices comprises user session load and/or traffic load.

29. The apparatus according to claim 28, wherein

the user session load comprises at least one of the following: a quantity of user sessions and session usage; and
the traffic load comprises bandwidth usage.

30. The apparatus according to any one of claims 25 to 29, wherein the obtaining module is configured to:
obtain the user information of the target terminal from the CP device when the target terminal requests the CP device to go online, wherein the user information is obtained by the CP device based on a dialup protocol packet sent by the target terminal.

**31.** The apparatus according to any one of claims 25 to 29, wherein if the target terminal is an online target terminal that has accessed a gateway through a first UP device, the first UP device is at least one UP device in the plurality of UP devices;
the determining module is configured to:

when determining that the at least one first UP device meets a steering condition, determine the target UP device in the plurality of UP devices based on the user information and the load of the plurality of UP devices, wherein the steering condition comprises: the load meets a specified second load condition, and/or a device status changes; and
the control module is configured to:
indicate to steer at least one online target terminal on the first UP device that meets the steering condition to the target UP device.

**32.** The apparatus according to claim 31, wherein that the device status of the first UP device changes comprises either or both of the following:

the first UP device goes pre-offline or goes offline due to a fault; or
the first UP device initially goes online or resumes going online.

**33.** The apparatus according to claim 31 or 32, wherein when the first UP device that meets the steering condition accesses a plurality of online target terminals, the control module is configured to:
indicate to steer a plurality of online target terminals that are on a same interface and/or in a same internet protocol IP address segment on the first UP device that meets the steering condition to a same target UP device or different target UP devices.

**34.** The apparatus according to claim 33, wherein that the control module indicates to steer a plurality of online target terminals that are on a same interface and/or in a same IP address segment on the first UP device that meets the steering condition to a same target UP device comprises:
indicating to steer the plurality of online target terminals that are on the same interface and/or in the same IP address segment on the first UP device that meets the steering condition to a same target interface and/or a same target internet protocol IP address segment on the target UP device.

**35.** The apparatus according to any one of claims 25 to 34, wherein the network system further comprises a software-defined networking SDN controller, wherein

the apparatus is configured in the CP device;
the apparatus is configured in the SDN controller; or
the apparatus is a device independent of the CP device and the SDN controller.

**36.** The apparatus according to claim 35, wherein if the apparatus is the device independent of the CP device and the SDN controller,

the obtaining module is configured to receive the user information from the CP device;
the obtaining module is further configured to receive, from the CP device, any one or more of the following: the load of the plurality of UP devices, device status information of the plurality of UP devices, and steering indication information, wherein the steering indication information is used to indicate that the at least one first UP device in the plurality of UP devices meets the steering condition; and
the control module is configured to indicate the SDN controller to enable the target terminal to access the target UP device.

**37.** The apparatus according to claim 35 or 36, wherein that the control module indicates the SDN controller to enable the target terminal to access the target UP device comprises:

sending a steering instruction to the SDN controller, wherein the steering instruction carries access line information of the target terminal and device information of the target UP device, and the steering instruction is used to instruct the SDN controller to control, through a steering function SF device based on the access line information of the target terminal and the device information of the target UP device, the target terminal to access the target UP device; and

the control module is further configured to send steering information to the CP device, wherein the steering information is used to indicate the target UP device corresponding to the target terminal and the device information of the target UP device.

38. The apparatus according to claim 37, wherein the access line information is carried in the dialup protocol packet sent by the target terminal through the SF device, and the access line information comprises a media access control MAC address of the target terminal, a device identifier of an access network AN device, port information of a port that is in the AN device and that is connected to the SF device, and virtual local area network VLAN information corresponding to the target terminal; and

the device information of the target UP device comprises a device identifier of the target UP device, interface information of a target interface of the target UP device, and a network identifier of a virtual extensible local area network VXLAN corresponding to the target interface.

39. The apparatus according to any one of claims 25 to 38, wherein the any UP device in the plurality of UP devices is a physical UP device or a virtual UP device.

40. An apparatus for accessing a gateway, used in a network system comprising a virtual broadband network gateway vBNG, wherein the vBNG comprises a control plane CP device and a plurality of apparatuses managed by the CP device, the network system further comprises a user plane steering function USF device, and any one of the plurality of apparatuses comprises:

an obtaining module, configured to obtain load and/or device status information of the apparatus; and
a sending module, configured to send the load and/or the device status information to the CP device, wherein the load and/or the device status information are/is used by the USF device to determine a target UP device in the plurality of UP devices based on the load and/or the device status information obtained from the CP device, and indicate a target terminal to access the target UP device.

41. The apparatus according to claim 40, wherein

the sending module sends the load and/or the device status information to the CP device based on a predetermined time period; or
the sending module sends the load and/or the device status information to the CP device when the apparatus meets a specified condition.

42. The apparatus according to claim 41, wherein the specified condition comprises: a status of the apparatus changes and/or the load of the apparatus changes.

43. The apparatus according to claim 42, wherein that the status of the apparatus changes comprises either or both of the following:

the apparatus goes pre-offline or goes offline due to a fault; or
the apparatus initially goes online or resumes going online; and
that the load of the apparatus changes comprises: the load of the apparatus meets a specified load condition.

44. The apparatus according to any one of claims 40 to 43, wherein the apparatus is a physical UP device and/or a virtual UP device.

45. An apparatus for accessing a gateway, used in a network system comprising a virtual broadband network gateway vBNG, wherein the vBNG comprises the apparatus and a plurality of UP devices managed by the apparatus, the network system further comprises a user plane steering function USF device, and the apparatus comprises:

a receiving module, configured to receive load and/or device status information of any UP device from the any UP device in the plurality of UP devices; and
a sending module, configured to send the load and/or the device status information of the any UP device to the USF device, wherein the load and/or the device status information are/is used by the USF device to determine a target UP device in the plurality of UP devices based on the load and/or the device status information, and indicate a target terminal to access the target UP device.

46. The apparatus according to claim 45, wherein the sending module is further configured to:
send user information of the target terminal to the USF device, wherein the user information is used by the USF device to determine the target UP device in the plurality of UP devices based on the user information and the load and/or the device status information.

47. The apparatus according to claim 46, wherein the enabling a target terminal to access the target UP device comprises steering an online target terminal to the target UP device, and the sending module is further configured to:
send steering indication information to the USF device, wherein the steering indication information is used to indicate that at least one UP device in the plurality of UP devices meets a steering condition, and the steering indication information is used by the USF device to determine, based on the steering indication information, whether to steer at least one online target terminal on the at least one UP device that meets the steering condition to the target UP device; and the steering condition comprises: the load meets a specified load condition, and/or a device status changes.

48. The apparatus according to claim 47, wherein that the device status of the at least one UP device changes comprises: the at least one UP device goes pre-offline or goes offline due to a fault, or the at least one UP device initially goes online or resumes going online.

49. An apparatus for accessing a gateway, comprising at least one processor, wherein the at least one processor is coupled to at least one memory; and
the at least one processor is configured to execute a computer program or instructions stored in the at least one memory, so that the apparatus performs the method according to any one of claims 1 to 15, or performs the method according to any one of claims 16 to 20, or performs the method according to claims 21 to 24.

50. A readable storage medium, configured to store instructions, wherein when the instructions are executed, the method according to any one of claims 1 to 15 is implemented, or the method according to any one of claims 16 to 20 is implemented, or the method according to claims 21 to 24 is implemented.

51. A chip system, comprising a processor and an interface circuit, wherein

the interface circuit is configured to: receive instructions and transmit the instructions to the processor; and
the processor is configured to perform the method according to any one of claims 1 to 15, or perform the method according to any one of claims 16 to 20, or perform the method according to claims 21 to 24.

52. A network system, comprising a virtual broadband network gateway vBNG and a user plane steering function USF device, wherein the vBNG comprises a control plane CP device and a plurality of UP devices managed by the CP device;

the USF device performs the method according to any one of claims 1 to 15;
any UP device in the plurality of UP devices performs the method according to any one of claims 16 to 20; and
the CP device performs the method according to claims 21 to 24.

FIG. 1

EP 4 199 578 A1

201                    205

Processor          Processor

CPU 0              CPU 0

CPU 1              CPU 1

                                                      203

                                        Memory
Communication 202                                              208
bus                                     Program code

                        204          206          207

Communication       Output       Input
interface           device       device

FIG. 2

| A USF device obtains user information of a target terminal | 310 |

↓

| The USF device determines a target UP device in a plurality of UP devices based on the user information of the target terminal and load of the plurality of UP devices | 320 |

↓

| The USF device indicates to enable the target terminal to access the target UP device | 330 |

FIG. 3

| Terminal | SF device | CP device | USF device | AAA server |
|----------|-----------|-----------|------------|------------|

S311: Perform dialup by using the PPPoE/DHCP

S312: Dialup protocol packet

S313: Parse the dialup protocol packet, to obtain access line information and dialup authentication information of the terminal

S314: Perform authentication and authorization

S315: Obtain an SLA level of the terminal based on the dialup authentication information of a user

S316: Send the SLA level of the terminal

FIG. 4

UP 1   UP 2   UP 3

Target terminal

Request to go online

ave1

FIG. 5A

UP 1    UP 2    UP 3    ave2    UP 2    UP 3    ave2

FIG. 5B

UP 1    UP 2    UP 3    ave2    UP 1    UP 2    UP 3    ave3

FIG. 5C

UP 1    UP 2    UP 3    thr    ave1    UP 1    UP 2    UP 3    thr    ave1

FIG. 5D

| Target terminal | SDN controller | | SF device | UP 1 | UP 2 | CP device | | USF device |
|---|---|---|---|---|---|---|---|---|

S601: Perform dialup by using the PPPoE/DHCP

S602: Dialup protocol packet

S603: Dialup protocol packet

S604: Parse the dialup protocol packet

S605: Steering information

S606: Send an IP address allocated to the target terminal

S608: Send a steering instruction, where the steering instruction carries access line information of the target terminal and device information of a target UP device

S607: User entry information

S609: The SDN controller configures the SF device

S610: The target terminal is connected to a network by accessing the target UP device

FIG. 6

EP 4 199 578 A1

| Target terminal | SDN controller | SF device | UP 1 | UP 2 | CP device | USF device |
|---|---|---|---|---|---|---|

S701: Interact

S702: Make a steering decision for an online terminal

S703: Steering information

S704: User entry information

S705: Delete original user entry information

S706: Send a steering instruction, where the steering instruction carries access line information of the online terminal to be steered and device information of a target UP device

S707: The SDN controller configures the SF device

S708: The target terminal is connected to a network by accessing the target UP device

FIG. 7

Apparatus 800 for accessing a gateway

Obtaining module 810

Determining module 820

Control module 830

FIG. 8

Apparatus 900 for accessing a gateway

Obtaining module 910

Sending module 920

FIG. 9

Apparatus 1000 for accessing a gateway

Receiving module 1010

Sending module 1020

FIG. 10

## INTERNATIONAL SEARCH REPORT

| International application No. |
| --- |
| **PCT/CN2021/115892** |

**A.  CLASSIFICATION OF SUBJECT MATTER**

H04W 28/08(2009.01)i;  H04W 88/16(2009.01)i

According to International Patent Classification (IPC) or to both national classification and IPC

**B.  FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 宽带网络网关, 虚拟, 控制面, 用户面, 迁移, 切换, 负载, 均衡, 平衡, BNG, vBNG, virtual, control, user, switch, move, transfer, load, balance

**C.  DOCUMENTS CONSIDERED TO BE RELEVANT**

| Category* | Citation of document, with indication, where appropriate, of the relevant passages | Relevant to claim No. |
| --- | --- | --- |
| PX | CN 111865621 A (HUAWEI TECHNOLOGIES CO., LTD.) 30 October 2020 (2020-10-30) description, paragraphs [0003]-[0128] | 1-52 |
| Y | CN 107666419 A (ZTE CORPORATION) 06 February 2018 (2018-02-06) description paragraphs [0080]-[0261] | 1-52 |
| Y | CN 108924849 A (HUAWEI TECHNOLOGIES CO., LTD.) 30 November 2018 (2018-11-30) description, paragraphs [0002]-[0041] | 1-52 |
| A | CN 110120884 A (JUNIPER NETWORKS INC.) 13 August 2019 (2019-08-13) entire document | 1-52 |
| A | CN 109428792 A (ZTE CORPORATION) 05 March 2019 (2019-03-05) entire document | 1-52 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 November 2021** | **16 November 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/115892**

| Patent document cited in search report | | | Publication date (day/month/year) | Patent family member(s) | | | Publication date (day/month/year) |
|---|---|---|---|---|---|---|---|
| CN | 111865621 | A | 30 October 2020 | EP | 3731464 | A1 | 28 October 2020 |
| | | | | WO | 2020216339 | A1 | 29 October 2020 |
| CN | 107666419 | A | 06 February 2018 | EP | 3493483 | A1 | 05 June 2019 |
| | | | | EP | 3493483 | A4 | 12 February 2020 |
| | | | | WO | 2018019299 | A1 | 01 February 2018 |
| | | | | CN | 107666419 | B | 11 December 2020 |
| CN | 108924849 | A | 30 November 2018 | WO | 2018177434 | A1 | 04 October 2018 |
| | | | | EP | 3573417 | A1 | 27 November 2019 |
| | | | | US | 2020029375 | A1 | 23 January 2020 |
| | | | | EP | 3573417 | A4 | 04 March 2020 |
| | | | | CN | 108924849 | B | 08 December 2020 |
| CN | 110120884 | A | 13 August 2019 | US | 2019245748 | A1 | 08 August 2019 |
| | | | | US | 10560331 | B2 | 11 February 2020 |
| | | | | CN | 112953782 | A | 11 June 2021 |
| | | | | EP | 3525399 | A1 | 14 August 2019 |
| | | | | CN | 110120884 | B | 20 April 2021 |
| CN | 109428792 | A | 05 March 2019 | WO | 2019042225 | A1 | 07 March 2019 |

Form PCT/ISA/210 (patent family annex) (January 2015)

**EP 4 199 578 A1**

**REFERENCES CITED IN THE DESCRIPTION**

**Patent documents cited in the description**

- CN 202010924405X